# EUROPEAN PATENT APPLICATION

(11) **EP 4 102 228 A1**
(43) Date of publication of application: **14.12.2022**
(21) Application number: 21179108.2
(22) Date of filing: 11.06.2021
(51) Int. Cl.: G01N 35/00

(54) **AUTOMATED METHOD FOR HANDLING AN IN-VITRO DIAGNOSTICS CONTAINER IN AN IN-VITRO DIAGNOSTICS LABORATORY**

(71) Applicant: F. Hoffmann-La Roche AG, 4070 Basel (CH); Roche Diagnostics GmbH, 68305 Mannheim (DE)
(72) Inventor: Benedetti, Riccardo Leone, 6342 Rotkreuz (CH)
(74) Representative: Altmann Stößel Dick Patentanwälte PartG mbB

(57) **Abstract**

An automated method for handling an in-vitro diagnostics IVD container (30) in an IVD laboratory (1) is proposed. The method comprises at least the steps of
- measuring at least one physical quantity of an IVD container (30);
- storing the at least one physical quantity in a read and writeable data carrier (50) attached to the IVD container (30); and
- retrieving the at least one physical quantity from the read and writeable data carrier (50) attached to the IVD container (30).

## Description

### Technical Field

The invention relates to handling an in-vitro diagnostics (IVD) container, such as sample tubes or reagent cartridges, in an IVD laboratory.

### Background art

IVD testing has a major effect on medical decisions, providing physicians with pivotal information. IVD testing is usually performed in IVD laboratories, which in many cases can have a significant number of IVD laboratory instruments. In an IVD laboratory, a plurality of IVD containers, for example comprising biological samples, have to be handled, in particular, automatically. Typically, the plurality of IVD containers each is handled by multiple IVD instruments, for example first by a pre-analytic IVD laboratory instrument, then by an analytic IVD laboratory instrument, and later possibly by a post-analytic IVD laboratory instrument. The handling of IVD containers should be done with particular care, since the IVD containers often are fragile and any mistake in handling the IVD containers may lead to unwanted or even dangerous effects, such as e.g. cross-contamination.

### Summary

It is the purpose of this invention to provide methods and devices that expand the current state of the art. An automated method for handling an in-vitro diagnostics IVD container, a method for gripping an IVD container in an IVD laboratory, an IVD laboratory designed for analyzing biological samples and designed for handling IVD containers, and an IVD container holder for use in an IVD laboratory according to the independent claims are proposed. Particular embodiments which might be realized in an isolated fashion or in any arbitrary combinations are listed in the dependent claims as well as throughout the specification.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B", and "A includes B" may all refer to a situation in which, besides B, no other element is present in A (i.e. a situation in which A solely and exclusively consists of B) and to a situation in which, besides B, one or more further elements are present in entity A, such as element C, elements C and D, or even further elements.

Further, it shall be noted that the terms "at least one", "one or more", or similar expressions indicating that a feature or element may be present once or more than once typically will be used only once when introducing the respective feature or element. In the following, in most cases, when referring to the respective feature or element, the expressions "at least one" or "one or more" might not be repeated, non-withstanding the fact that the respective feature or element may be present once or more than once.

Further, as used in the following, the terms "particularly", "more particularly", "specifically", "more specifically" or similar terms are used in conjunction with options without restricting alternative possibilities. Thus, features introduced by these terms are options and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention, and without any restriction regarding the possibility of combining the features introduced in such way with other optional or non-optional features of the invention.

An automated method for handling an in-vitro diagnostics IVD container in an IVD laboratory is proposed, the method comprising at least the steps of
- measuring at least one physical quantity of an IVD container;
- storing the at least one physical quantity in a read and writeable data carrier attached to the IVD container; and
retrieving the at least one physical quantity from the read and writeable data carrier attached to the IVD container.

According to some embodiments, the step of measuring is performed at a first IVD laboratory instrument, and
- the step of retrieving is performed at a second IVD laboratory instrument.

According to some embodiments,
- the first IVD laboratory instrument is a pre-analytic IVD laboratory instrument, and
- the second IVD laboratory instrument is an analytic IVD laboratory instrument and/or a post-analytic IVD laboratory instrument.

According to some embodiments, the method comprises the step of
- specifying a container-processing step related to the handling of the IVD container based on the retrieved at least one physical quantity.

According to some embodiments, the step of specifying a container-processing step related to the handling of the IVD container based on the retrieved at least one physical quantity comprises choosing a container-processing step.

According to some embodiments, the step of specifying a container-processing step related to the handling of the IVD container based on the retrieved at least one physical quantity comprises choosing a processing-parameter of a container-processing step.

According to some embodiments, the step of specifying a container-processing step related to the handling of the IVD container based on the retrieved at least one physical quantity comprises specifying a gripping force with which a gripper grips the IVD container.

According to some embodiments, the step of specifying a container-processing step related to the handling of the IVD container based on the retrieved at least one physical quantity comprises
- specifying an IVD container holder for holding the IVD container,
- specifying a position in an IVD container holder for holding the IVD container,
- specifying to transfer the IVD container from a first IVD container holder to a second IVD container holder, and/or
- specifying to transfer the IVD container from a first position in an IVD container holder comprising two or more positions for holding IVD containers to a second position in the container holder.

According to some embodiments, the method comprises the step of
- performing the specified container-processing step related to the handling of the IVD container.

According to some embodiments, the IVD container is a sample container.

According to some embodiments, the IVD container is a reagent container.

According to some embodiments, the read and writeable data carrier is attached to the IVD container in that it is immediately attached to the IVD container.

According to some embodiments, the read and writeable data carrier is attached to the IVD container in that it is attached to an IVD container holder for holding the IVD container.

According to some embodiments, the at least one physical quantity comprises at least one dimension of at least a part of the IVD container.

According to some embodiments, the at least one physical quantity comprises one or more of
- a wall thickness of the IVD container,
- an outer 3D-shape of the IVD container,
- a 3D-shape of the IVD container,
- an angle of the IVD container,
- a curvature of the IVD container.

According to some embodiments, the at least one physical quantity comprises one or more of
- an outer diameter of the IVD container,
- an inner diameter of the IVD container,
- a height of the IVD container,
- a volume of the IVD container, and/or
- a mass of the IVD container.

Further proposed is a method for gripping an IVD container in an IVD laboratory, the method comprising the automated method according to any of the preceding proposals and the following step:
- specifying a gripper force with which a gripper grips the IVD container.

Further proposed is an IVD laboratory designed for analyzing biological samples and designed for handling IVD containers, the IVD laboratory comprising one or more IVD laboratory instruments, and the IVD laboratory being designed for performing the method of any of the preceding proposals.

According to some embodiments, the IVD laboratory comprises
- a measuring unit designed for measuring the at least one physical quantity of the IVD container;
- a storing unit designed for storing the at least one physical quantity in the read and writeable data carrier attached to the IVD container; and
- a retrieving unit designed for retrieving the at least one physical quantity from the read and writeable data carrier attached to the IVD container.

According to some embodiments, the measuring unit is comprised in a pre-analytic IVD laboratory instrument and the retrieving unit is comprised in an analytic IVD laboratory instrument and/or a post-analytic IVD laboratory instrument.

According to some embodiments, the measuring unit is comprised in a pre-analytic IVD laboratory instrument and/or in an analytic IVD laboratory instrument and the retrieving unit is comprised in a pre-analytic IVD laboratory instrument and/or in an analytic IVD laboratory instrument and/or in a post-analytic IVD laboratory instrument.

According to some embodiments,
- at least one of the one or more IVD laboratory instruments comprises a gripper designed for gripping IVD containers, and
- the IVD laboratory is designed for specifying the gripper force with which the gripper grips the IVD container based on the at least one physical quantity.

According to some embodiments, the measuring unit comprises one or more of
- a camera,
- a reflector,
- a light emitter,
- a light detector,
- a laser,
- a LIDAR system,
- a mass-sensor, and/or
- an artificial intelligence unit.

According to some embodiments, the IVD laboratory comprises a plurality of IVD container holders that each is designed for holding one or more IVD containers and that each comprises a read and writeable data carrier, wherein
- the storing unit is designed for storing physical quantities of IVD containers in the read and writeable data carriers comprised in the IVD container holders; and
- the retrieving unit is designed for retrieving physical quantities of IVD containers from the read and writeable data carriers comprised in the IVD container holders.

According to some embodiments, the IVD laboratory comprises a plurality of IVD container, wherein
- to each of the IVD container a read and writeable data carrier is attached,
- the storing unit is designed for storing physical quantities of IVD containers in the read and writeable data carriers attached to the IVD containers; and
- the retrieving unit is for retrieving physical quantities of IVD containers from the read and writeable data carriers attached to the IVD containers.

According to some embodiments, the IVD laboratory comprises at least one control unit, wherein the control unit is designed for controlling at least partially at least one IVD laboratory instrument.

An IVD container holder for use in an IVD laboratory, e.g. one of the IVD laboratories proposes herein, is proposed, wherein
- the IVD container holder is designed for holding an IVD container;
- the IVD container holder comprises
   ∘ a container-detection sensor designed for detecting if an IVD container is held by the IVD container holder, and
   ∘ a read and writeable data carrier designed for storing physical quantities associated with an IVD container; and
- the IVD container holder is designed for erasing physical quantities associated with an IVD container from the read and writeable data carrier if the container-detection sensor detects that this IVD container is no longer held by the IVD container holder.

According to some embodiments, the container-detection sensor comprises a spring mechanism, wherein a spring load larger than a threshold indicates that an IVD container is held by the IVD container holder.

According to some embodiments,
- the IVD container holder comprises a plurality of positions for holding an IVD container;
- the container-detection sensor is designed for detecting in which position an IVD container is held;
- the read and writeable data carrier is designed for storing physical quantities associated with an IVD container together with an information indicating in which position the IVD container is held.

### Short description of the Figures

Further optional features and embodiments will be disclosed in more detail in the subsequent description of embodiments, e.g. in conjunction with the dependent claims. Therein, the respective optional features may be realized in an isolated fashion as well as in any arbitrary feasible combination, as the skilled person will realize. The scope is not restricted by the shown embodiments. The embodiments are schematically depicted in the Figures. Therein, identical reference numbers in these Figures usually refer to identical or functionally comparable elements.

In the Figures:
- Figure 1: shows a flowchart illustrating an embodiment of an automated method for handling an in-vitro diagnostics container;
- Figure 2: shows a schematic embodiment of an in-vitro diagnostics laboratory;
- Figure 3: shows a flowchart illustrating a further embodiment of the method;
- Figure 4: shows an exemplary storage structure of a read and writeable data carrier attached to the IVD container;
- Figure 5: shows a flowchart illustrating a method for gripping an IVD container;
- Figures 6A1 to 6C: show exemplary embodiments of a pre-analytic IVD laboratory instrument measuring the physical quantity of an exemplary IVD container and storing the physical quantity (Figures 6A1 and 6A2 (without storing)), an exemplary embodiment of an analytic IVD laboratory instrument analyzing a sample of the IVD container (Figure 6B), and a post-analytic IVD laboratory instrument receiving the IVD container (Figure 6C);
- Figures 7A and 7B: show further exemplary embodiments of IVD container in an analytic IVD laboratory instrument;
- Figures 8A and 8B: show embodiments of physical quantities of an IVD container;
- Figure 9: shows an embodiment of an IVD container holder comprising a containerdetection sensor;
- Figure 10: shows an embodiment of one IVD container in an IVD container holder designed to hold three IVD containers; and
- Figure 11: shows an embodiment of an IVD container in an IVD container holder comprising a further type of a container-detection sensor.

### Detailed description of the embodiments

Certain terms will be used in this description, the formulation of which should not be interpreted to be limited by the specific term chosen, but as to relate to the general concept behind the specific term.

Proposed is an automated method for handling an in-vitro diagnostics IVD container 30 in an IVD laboratory 1. The method comprising at least the steps of
- measuring at least one physical quantity of an IVD container 30; (reference number 110)
- storing the at least one physical quantity in a read and writeable data carrier 50 attached to the IVD container 30; (reference number 112) and
- retrieving the at least one physical quantity from the read and writeable data carrier 50 attached to the IVD container 30 (reference number 114).

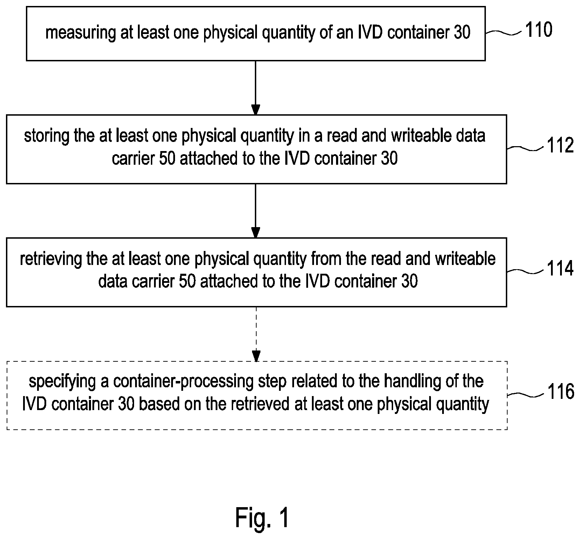

The method comprises the above-mentioned steps which, as an example, may be performed in the given order. According to some embodiments, to the method may comprise performing one or more of the method steps once or repeatedly. For example, measuring and storing may be repeated during the method, e.g. in case in the retrieving an error such as storage error is determined. Further, it is possible to perform two or more of the method steps simultaneously or in a timely overlapping fashion. The method may comprise further method steps which are not listed. An embodiment of an exemplary flowchart of the method for handling an IVD container 30 is e.g. shown in Figure 1. In the exemplary embodiment of Figure 1, the steps of measuring 110, storing 112 and reading 114 may be performed in the given order. In addition, indicated as optional step, the method may comprise a step of specifying 116 a container-processing step related to the handling of the IVD container 30 based on the retrieved at least one physical quantity.

The term "automated" as used herein is a broad term and is to be given its ordinary and customary meaning to a person of ordinary skill in the art and is not to be limited to a special or customized meaning. According to some embodiments, the mentioned method steps may be performed without using manual action and without interaction by a user. According to some specific embodiments, all steps between the mentioned method steps may be performed without using manual action and without interaction by a user. However, at least some steps between the mentioned method steps may be performed using manual action or interaction by a user. For example, after the mentioned steps of measuring and storing are performed without using manual action and without interaction by a user, the IVD container is interacted with by a user (e.g. transported by a user to a different IVD laboratory instrument), and then the mentioned step of retrieving is again performed without using manual action and without interaction by a user. For example, manual action/user interaction may comprise one or more of positioning an IVD container holder 40 and/or IVD container 30, selecting an IVD container holder 40 and/or IVD container 30, positioning the measuring unit 20, cleaning and the like. According to a specific embodiment, the method steps may be performed completely by the IVD laboratory 1 (e.g. controlled by one or more control units 23), in particular without manual action.

According to some embodiments, the method steps may be performed by a measuring unit 20, a storing unit 21, and a retrieving unit 22 of an IVD laboratory 1, wherein
- the measuring unit 20 is designed for measuring the at least one physical quantity of the IVD container 30;
- the storing unit 21 is designed for storing the at least one physical quantity in the read and writeable data carrier 50 attached to the IVD container 30; and
- the retrieving unit 22 is designed for retrieving the at least one physical quantity from the read and writeable data carrier 50 attached to the IVD container 30.

According to some embodiments, the measuring unit 20, the storing unit 21 and the retrieving unit 22 may be comprised by IVD laboratory instruments 10.

According to some embodiments, a first IVD laboratory instrument 10 comprises a measuring unit 20 and a storing unit 21 and the method steps of measuring and storing are performed at that first IVD laboratory instrument 10; and a second IVD laboratory instrument 10 comprises a retrieving unit 22 and the method step of retrieving is performed at that second IVD laboratory instrument 10. According to some specific embodiments, multiple second IVD laboratory instruments 10 each comprise a retrieving unit 22 and the method step of retrieving is performed at each of the second IVD laboratory instruments 10.

According to an example, the at least one physical quantity of an IVD container 30 is measured and stored in a read and writeable data carrier 50 attached to the IVD container 30 at one or more first IVD laboratory instruments (e.g. a by a single IVD first laboratory instruments such as a single pre-analytic IVD laboratory instrument) and the at least one physical quantity is retrieved from the read and writeable data carrier 50 attached to the IVD container 30 by multiple downstream IVD laboratory instruments (e.g. where none of the downstream multiple IVD laboratory instruments is a pre-analytic IVD laboratory instrument). Thereby, a once measured and stored physical quantity can be utilized multiple times downstream, e.g. by all downstream IVD laboratory instruments.

According to some embodiments, one or more of the IVD laboratory instruments 10, may comprise at least one control unit 23 designed for controlling the method steps of measuring and storing.

According to some embodiments, one or more of the IVD laboratory instruments 10 may comprise at least one control unit 23 designed for controlling the method step of retrieving.

According to some embodiments, the IVD laboratory may comprise a centralized control unit 23 designed for controlling at least some of, e.g. all, the IVD laboratory instruments 10 of the IV laboratory 1 and for controlling, e.g. initiating and monitoring, the method steps of measuring, storing and retrieving.

According to some embodiments, the control unit 23 may be designed for initiating and monitoring the method steps of measuring, storing, and/or retrieving such that the method can be performed automatically, as outlined above. For example, the control unit 23 is designed for controlling the measuring unit 20 for executing the measuring, the storing unit 21 for executing the storing, and/or the retrieving unit 22 for executing the retrieving.

According to some embodiments, the proposed method is automated in the sense that the method steps of measuring, storing, and retrieving is completely controlled by one or more control units 23.

The term "in-vitro diagnostics (IVD)" as used herein is a broad term and is to be given its ordinary and customary meaning to a person of ordinary skill in the art and is not to be limited to a special or customized meaning. In-vitro diagnostics may comprise performing at least one test on a sample, e.g. a biological sample that have been taken from a human body or an animal body. In-vitro diagnostic testing may specifically refer, without limitation, to detecting an analyte of interest in an biological sample and/or another property of an biological sample. The term "analyte" as used herein is a broad term and is to be given its ordinary and customary meaning to a person of ordinary skill in the art and is not to be limited to a special or customized meaning. The term specifically may refer, without limitation, to a component of a sample to be analyzed, e.g. molecules of various sizes, ions, proteins, metabolites and the like. The term "detecting the analyte in the biological sample" as used herein is a broad term and is to be given its ordinary and customary meaning to a person of ordinary skill in the art and is not to be limited to a special or customized meaning. The term specifically may refer, without limitation, to a quantitative and/or qualitative determination of at least one analyte in the biological sample. The result of the determination, as an example, may be a concentration of the analyte and/or the presence or absence of the analyte to be determined.

In-vitro diagnostic testing can support detecting diseases or other conditions, and can be used to monitor a person's overall health to help cure, treat, or prevent diseases. In vitro diagnostics may also be used in precision medicine to identify patients who are likely to benefit from specific treatments or therapies. In-vitro diagnostic testing can support medical diagnostics and medical decisions.

The term "biological sample" as used herein is a broad term and is to be given its ordinary and customary meaning to a person of ordinary skill in the art and is not to be limited to a special or customized meaning. According to some embodiments, the biological sample may be or may comprise at least one biological material that may potentially comprise at least one analyte of interest. For example, the biological sample may comprise a body fluid, such as blood, interstitial fluid, urine, saliva, or other types of body fluids. For example, the biological sample may be or may comprise an aliquot of a substance such as a biological compound. Specifically, the biological sample may be or may comprise at least one biological specimen, such as one or more of: blood; blood serum; blood plasma; urine; saliva.

According to some embodiments, the biological sample may be a liquid sample. For example, the liquid sample may be or may comprise at least one pure liquid, such as a liquid substance and/or a solution containing one or more liquid substances, comprising the biological substance. As another example, the liquid sample may be or may comprise a liquid mixture, such as a suspension, an emulsion and/or a dispersion of biological substances. According to some embodiments, the biological sample may be a solid sample, for example, at least one sample of tissue.

The term "IVD laboratory" as used herein is a broad term and is to be given its ordinary and customary meaning to a person of ordinary skill in the art and is not to be limited to a special or customized meaning. According to some embodiments, the IVD laboratory 1 may be a laboratory designed for performing at least one test on a sample, e.g. a biological sample that have been taken from a human body or an animal body (and/or a respective quality control (QC) sample). For example, the test on the sample may comprise applying at least one reagent to the sample and monitoring a detectable reaction. According to some embodiments, the IVD laboratory 1 may be a clinical laboratory. According to some embodiments, the IVD laboratory 1 may be a medical laboratory. According to some embodiments, the IVD laboratory 1 may be a forensic laboratory or a blood bank.

The term "IVD laboratory instrument" as used herein is a broad term and is to be given its ordinary and customary meaning to a person of ordinary skill in the art and is not to be limited to a special or customized meaning. The term "IVD laboratory instrument" may cover pre-analytic IVD laboratory instruments 10PRE, post-analytic IVD laboratory instruments 10POST, analytic IVD laboratory instruments 10ANA, and transport system 10TRANS.

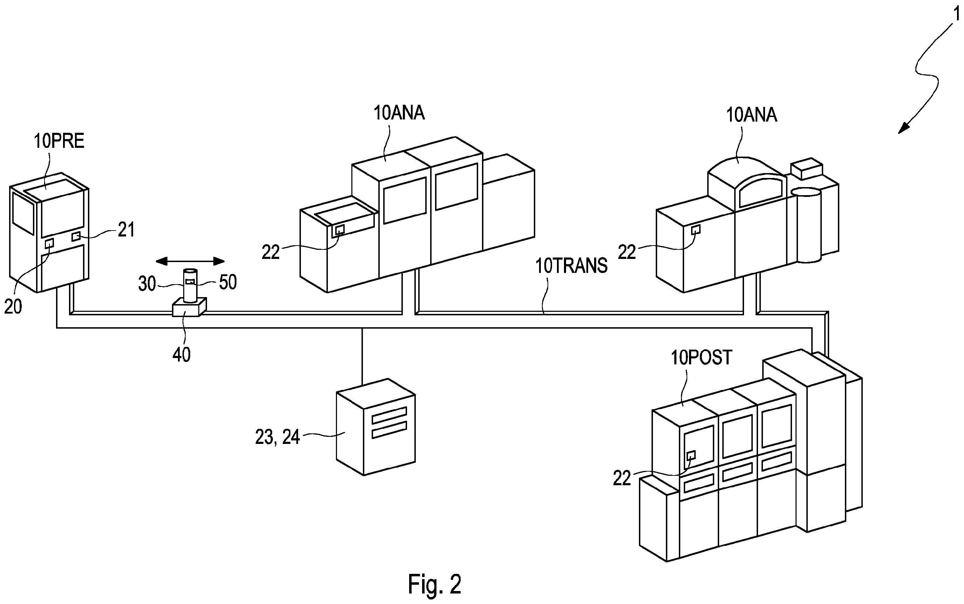

Figure 2 illustrates an example, in a highly schematic fashion, of an IVD laboratory 1. The IVD laboratory 1 of Figure 2 comprises exemplarily a pre-analytic IVD laboratory instrument 10PRE, two analytic IVD laboratory instrument 10ANA and one post-analytic IVD laboratory instrument 10POST. Shown is further an IVD container holder 40 which is transported from the pre-analytic IVD laboratory instrument 10PRE to the further IVD laboratory instruments 10ANA and 10POST of the IVD laboratory via an IVD laboratory instrument in form of a transport system 10TRANS. As shown in Figure 2, the IVD laboratory 1 may comprise at least one control unit 23 and a data management unit 24.

The term "IVD container" as used herein is a broad term and is to be given its ordinary and customary meaning to a person of ordinary skill in the art and is not to be limited to a special or customized meaning.

According to some embodiments, the IVD container 30 may be or may comprise at least one receptacle which is designed for containing a content received in the receptacle such as a sample, e.g. a liquid sample, or a reagent, e.g. a fluid reagent. According to some embodiments, the IVD container 30 may be a sample container, e.g. comprising (resp. being designed for comprising) a biological sample (and/or a respective quality control (QC) sample). According to some embodiments, the IVD container 30 may be an IVD container other than a sample container, e.g. a reagent container designed for comprising at least one reagent.

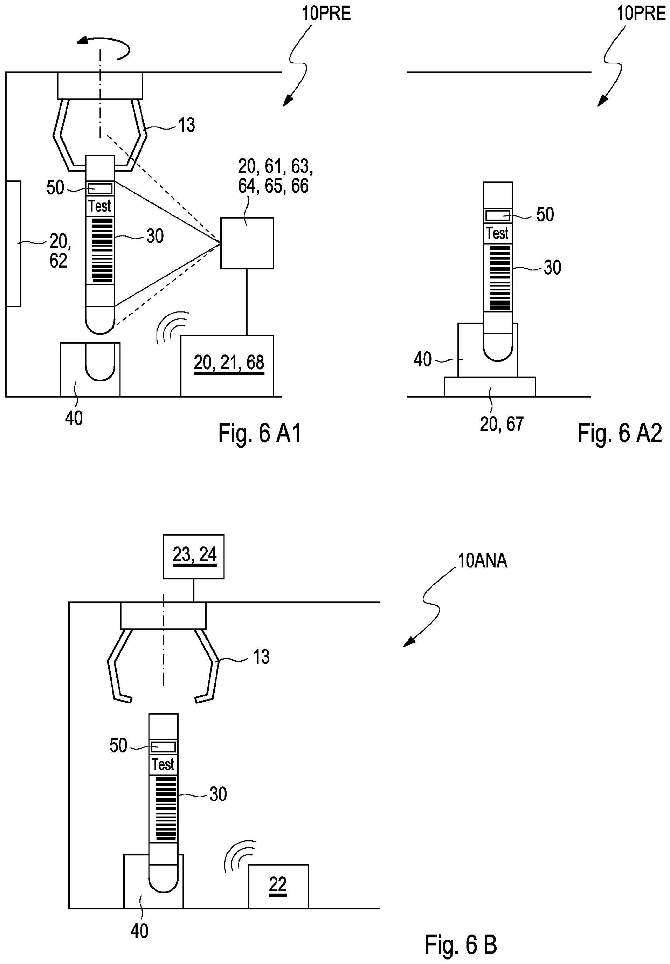

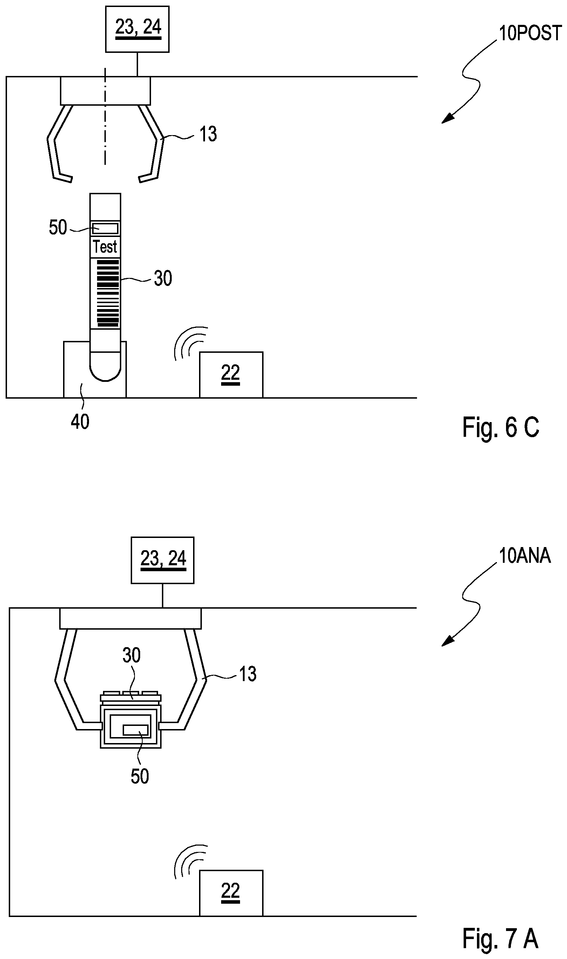

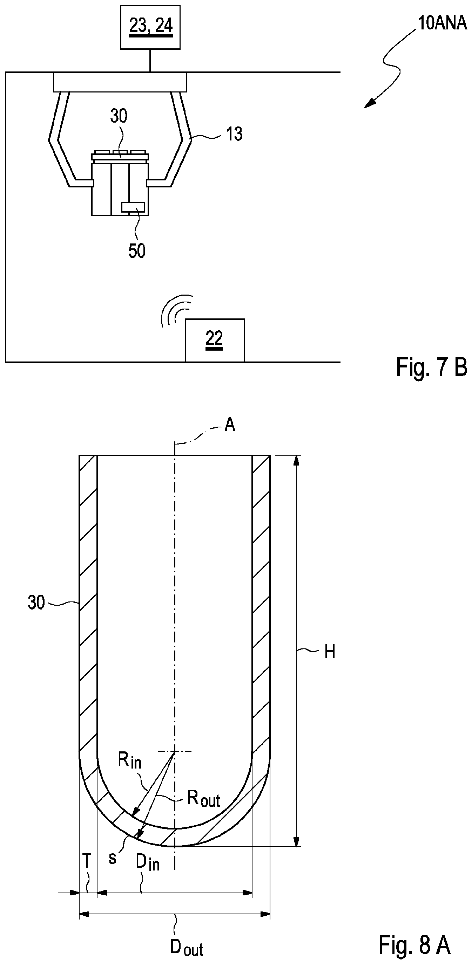

According to some embodiments, the IVD container 30 may be or may comprise at least one sample tube. The term "sample tube" as used herein is a broad term and is to be given its ordinary and customary meaning to a person of ordinary skill in the art and is not to be limited to a special or customized meaning. According to some embodiments, the sample tube may be an arbitrary individual container for storing and/or processing a content received by the sample tube. According to some embodiments, the sample tube may be a piece of laboratory glass- or plastic-ware, optionally comprising a cap on its upper end. For example, the sample tube may be a glass or plastic tube. According to a specific embodiment, the sample tube may be a cylindrical tube, e.g. a cylindrical tube having a circular and/or polygonal cross-section. Other types or forms of sample tubes are also possible. Figures 2, 6A1 to 6C, 8A, 8B, 9, 10 and 11 show exemplary embodiments of an IVD container 30 designed as sample tube. Figures 7A and 7B show further exemplary embodiments of an IVD container 30 designed as cartridges.

The term "handling" an IVD container, as used herein, is a broad term and is to be given its ordinary and customary meaning to a person of ordinary skill in the art and is not to be limited to a special or customized meaning. According to some embodiments, the handling may comprise performing one or more container-processing steps such as one or more of gripping the IVD container 30, moving (including rotating) the IVD container 30, placing and/or lifting the IVD container 30 in or from an IVD container holder 40, and placing and/or /removing samples contained in the IVD container 30 (resp. parts thereof). According to some embodiments, the handling may comprise simultaneous and/or parallel handling of more than one IVD container 30.

The term "physical quantity" of an IVD container 30 as used herein is a broad term and is to be given its ordinary and customary meaning to a person of ordinary skill in the art and is not to be limited to a special or customized meaning. According to some embodiments, the at least one physical quantity may comprise at least one dimension of at least a part of the IVD container 30 such as wall thickness, 3D-shape, angle, curvature. According to some embodiments, the physical quantity of the IVD container 30 may be a physical measurement value determined by at least one measurement, such as a dimensional measurement, of said IVD container 30 and/or the result of a calculation using such physical measurement value(s). The measurement may be performed using at least one measuring unit 20, e.g. a measuring unit 20 of an upstream IVD laboratory instrument such as a pre-analytic IVD laboratory instrument in which IVD container 30 is first handled by. According to some embodiments, the physical quantity of the IVD container 30 may be a physical quantity of said individual IVD container 30 from which the physical quantity was measured. For example, the physical quantity may differ from one IVD container 30 to another IVD container 30, even for IVD containers 30 of a same type, from a same batch, from a same manufacturer, and/or produced using a same process and/or a same machine. For example, an inner diameter of a first IVD container 30 may be different from an inner diameter of a second IVD container 30 of a same type. According to a specific embodiment, the physical quantity may be an actual physical value determined by measurement. For example, the physical quantity may deviate from a nominal value such as of a batch or manufacturer specification. According to some embodiments, measuring of the physical quantity of the IVD container 30 may comprise determining at least one quantity such as a height, a diameter, a mass and the like. For example, the physical quantity of the IVD container 30 may be expressed as the combination of a numerical value and a unit, e.g. a wall thickness of a sample tube of 1.5 millimeters. For example, the measuring of the at least one physical quantity may comprise one or more of at least one length measurement, at least one thickness measurement, at least one mass measurement, at least one angle measurement, at least one curvature measurement.

According to some embodiments, the measurement may comprise a spectral measurement; a result of the spectral measurement can e.g. be used to calculate a physical quantity in form of a dimension of the IVD container 30.

According to some embodiments, the at least one physical quantity comprises one or more of
- a wall thickness of the IVD container 30
- an outer 3D-shape of the IVD container 30,
- a 3D-shape of the IVD container 30,
- an angle of the IVD container 30,
- a curvature of the IVD container 30.

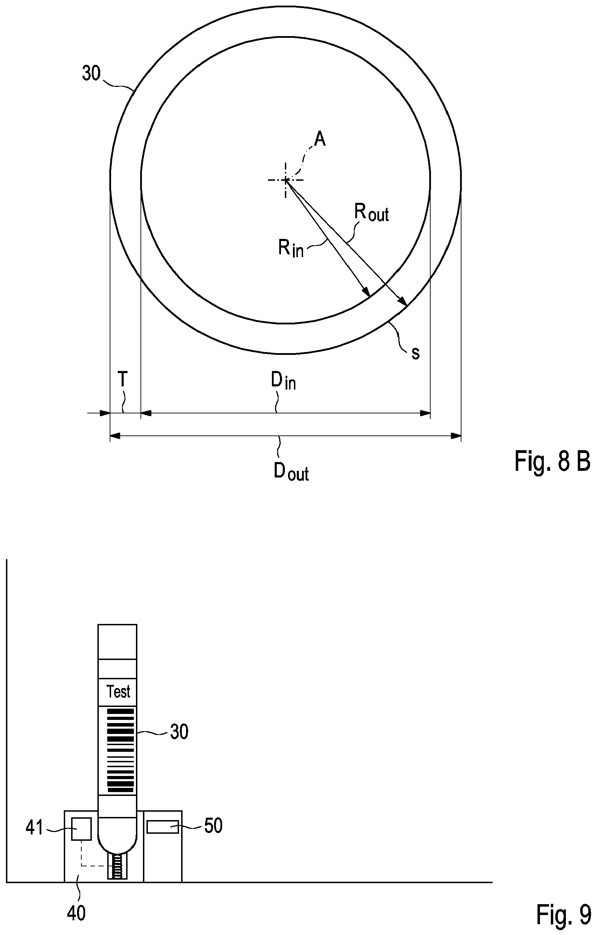

In Figures 8A and 8B an exemplary IVD container 30 and its physical quantities are shown. In Figure 8A the IVD container 30 is shown in sectional view along *A* and in Figure 8B the IVD container 30 is shown in section view along an axis perpendicular to *A.* The physical quantities can e.g. be measured using a LIDAR system, possibly in combination with an artificial intelligence unit, wherein the artificial intelligence unit e.g. has been trained using data comprising results of measurements using LIDAR systems as well as target values of the physical quantities to be measured.

An angle of an IVD container 30 may e.g. be determined using an angle between two edges resp. surfaces. A curvature of an IVD container 40 may e.g. be determined using a reciprocal of a radius. A radius may e.g. be determined using half a value of a diameter. A diameter may e.g. be determined using a distance between two points of the IVD container 30.

A wall thickness *T* of an IVD container 30 may e.g. be determined using a difference between an inner diameter *Dᵢₙ* and an outer diameter *Dₒᵤₜ* of the IVD container 30 and/or using a distance between a first point on a first (e.g. outer) side of the wall and a certain second point on a second (e.g. inner) side on the wall.

The IVD container 30 may have an inside and an outside separated by a surface. The surface may have an outer surface side facing the outside and an inner surface side facing the inside. According to some embodiments, the surface may be a curved surface. For example, the surface may be cylindrical having a circular and/or polygonal cross-section, a circular and/or polygonal open end and a closed curved end. The cross-section may be uniform along a height of the IVD container 30 or may vary along a height of the IVD container 30. According to some embodiments, an outer 3D-shape of an IVD container 30 may be a course of the outer surface side of the IVD container 30 along the height of the IVD container 30. According to some embodiments, a 3D-shape of an IVD container 30 may be a course of outer surface side and inner surface side of the IVD container 30 along the height of the IVD container 30.

An outer 3D-shape of an IVD container 30 may be determined using one or more of a height *H*, a length of a cylindrical part of the IVD container 30, a curvature *s* of a (e.g. outer) curved part of the IVD container 30, an outer diameter *Dₒᵤₜ,* an outer radius *Rₒᵤₜ,* an (e.g. outer) angle of the IVD container 30, and deviations from nominal values of the IVD container 30. A 3D-shape of the IVD container 30 may further be defined using one or more of a inner diameter *Dᵢₙ,* an inner radius *Rᵢₙ*, a curvature *s* of a (e.g. inner) curved part of the IVD container 30, an (e.g. inner) angle of the IVD container 30, and deviations from nominal values of the IVD container 30.

According to some embodiments, the at least one physical quantity comprises one or more of an outer diameter of the IVD container 30, an inner diameter of the IVD container 30, a height of the IVD container 30, a volume of the IVD container 30, and/or a mass of the IVD container 30.

The physical quantity may be different from so called tube identity information which may be assigned to the IVD container 30 because it belongs to a specific tube type or batch of IVD container 30. The physical quantity may be different from nominal data about the IVD container 30.

According to some embodiments, physical quantities of multiple sections of an IVD container 30 may be measured and the at least one physical quantity being stored/retrieved may e.g. be multiple measured physical quantities (e.g. the wall thicknesses at various sections), an average of measured physical quantities, a minimum of a measured physical quantities, a maximum of measured physical quantities, and/or a value calculated using the measured physical quantities. The minimum wall thickness of an IVD container 30 can e.g. be used to specify a gripping force for a gripper gripping the IVD container in that area.

The term "read and writeable data carrier" as used herein is a broad term and is to be given its ordinary and customary meaning to a person of ordinary skill in the art and is not to be limited to a special or customized meaning. The read and writeable data carrier 50 may be a read and rewritable data carrier. The read and writeable data carrier 50 may be or may comprise a memory device designed to store data. According to some embodiments, the read and writeable data carrier 50 is an electronic, magnetic, and/or mechanic memory device. According to some embodiments, the read and writeable data carrier 50 may further be designed for storing data in an organized manner, such as in a database, more specifically in at least one table. According to some embodiments, the read and writeable data carrier 50 may be designed for allowing access to and/or retrieving data stored in the read and writeable data carrier 50 and for storing of data into the read and writeable data carrier 50. According to some embodiments, the read and writeable data carrier 50 is designed for wirelessly storing and/or wirelessly retrieving of data in/from the read and writeable data carrier 50, e.g. by using radio-frequency electromagnetic radiation, such as by using the NFC standard

According to some embodiments, the read and writeable data carrier 50 may is at least one RFID chip, sometimes also referred to as RFID tag. The term "RFID chip" as used herein is a broad term and is to be given its ordinary and customary meaning to a person of ordinary skill in the art and is not to be limited to a special or customized meaning. According to some embodiments, the RFID chip may comprise an electronic chip such as a microchip for storing data. According to some embodiments, the RFID chip may comprise a coil or antenna and circuitry designed for transmitting and receiving signals with the coil or antenna. For example, the RFID chip may be designed as a RFID assembly described in US 2010/0021352 A1, the full content of which is included by reference.

According to some embodiments, the read and writeable data carrier 50, e.g. a RFID chip, may be a tag designed for exchanging data with a writing and/or retrieving device, e.g. by using radio-frequency electromagnetic radiation, such as by using the NFC standard.

According to some embodiments, the read and writeable data carrier 50, e.g. a RFID chip, may be a passive tag, e.g. a tag designed for being powered by an RFID reader (e.g. using induction via a coil of the passive tag).

According to some embodiments, the read and writeable data carrier 50, e.g. a RFID chip, may be an active tag, e.g. designed for being powered by a built-in power storage.

According to some embodiments, the read and writeable data carrier 50, e.g. a RFID chip, may comprise an antenna designed to receive and to emit a radio-frequency signal and an electronic chip such as a microchip designed to store data in one or more memories.

The storing of the physical quantity may comprise preserving the measured physical quantity in the read and writeable data carrier 50 for subsequent retrieval. According to some embodiments, the storing of the measured physical quantity may comprise writing the measured physical quantity into at least one memory of the read and writeable data carrier 50. According to some embodiments, the read and writeable data carrier 50 may comprise a plurality of memories such as system memory and user memory, wherein the user memory may provide read and writeable data storage. According to some embodiments, the read and writeable data carrier 50 may comprise a system memory with a unique identifier of the respective read and writeable data carrier 50, a user memory with one or more of a sample identifier, sample status data and sample container data, e.g. wherein the at least one measured physical quantity is stored as sample container data. According to some embodiments, the unique identifier may be an element or a combination of elements designed for storing one or more items of information identifying the read and writeable data carrier 50 such as in a readable fashion, specifically in a machine-readable fashion. According to some embodiments, the sample identifier may be an element or a combination of elements designed for storing one or more items of information identifying the sample and/or the IVD container 30. According to some embodiments, the information stored in the unique identifier and/or the sample identifier may be read using an appropriate reading device. For example, the unique identifier and/or the sample identifier may comprise an identification number. For example, the identification number may be one or more of an array or a sequence of numbers and/or letters encoding identification information. According to some embodiments, the identification number may be unique for a specific IVD container 30. This may allow identifying a specific IVD container 30 according to the respective identification number. According to some embodiments, the reading of the physical quantity by the retrieving unit 22 may be performed in connection with the reading of a identification number, which can e.g. be beneficial for handling multiple IVD containers 30.

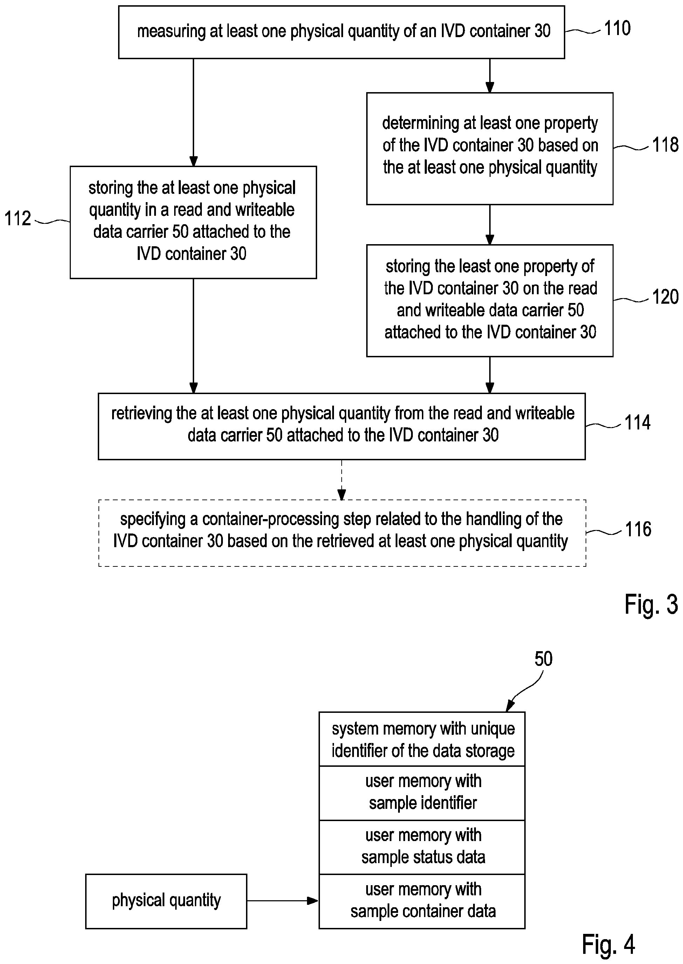

Figure 4 shows a schematic of an exemplary storage pattern of a read and writeable data carrier 50 comprising a system memory with unique identifier of the data storage, user memory with sample identifier, sample status data, and sample container data. In this embodiment, the physical quantity may e.g. be stored as sample container data in the user memory.

The term "attached to the IVD container" as used herein is a broad term and is to be given its ordinary and customary meaning to a person of ordinary skill in the art and is not to be limited to a special or customized meaning. According to some embodiments, the read and writeable data carrier 50 may be attached to the IVD container 30 in that it is immediately attached to the IVD container 30, e.g. in touch with the IVD container 30 and affixed to the IV container 30, e.g. affixed such that the read and writeable data carrier 50 is, at least typically, not detached during a normal handling of the IVD container 30 in the laboratory.

According to some embodiments, the read and writeable data carrier 50 may be attached to the IVD container 30 in that the IVD container 30 is equipped with the read and writeable data carrier 50.

According to some embodiments, the read and writeable data carrier 50 may be attached to the IVD container 30 in that the read and writeable data carrier 50 is sticked on the IVD container 30. According to an example, the IVD container 30 may be a sample tube and the read and writeable data carrier 50 may be glued via an adhesive on a surface of the sample tube.

According to some embodiments, the read and writeable data carrier 50 may be attached to the IVD container 30 in that it is attached to an IVD container holder 40 for holding the IVD container 30.

According to some embodiments, the read and writeable data carrier 50 may be linked with the IVD container 30, for example separable or inseparable. For example, the linking of the writeable data carrier 50 and the IVD container 30 may be a spatial linking.

According to some embodiments, the read and writeable data carrier 50 may be attached to the IVD container 30 in that the read and writeable data carrier 50 is a local data carrier that is moved together with the IVD container 30. For example, the read and writeable data carrier 50 may be in proximity of the IVD container 30 during the steps of storing and/or retrieving of the IVD container 30. According to some specific embodiments, the read and writeable data carrier 50 is attached to the IVD container 30 such that it remains in the proximity IVD container 30 in between the step of storing and the step of retrieving. For example, the read and writeable data carrier 50 may be arranged at a distance of lower or equal 0.05 meters, e.g. lower or equal 0.01 meters, specifically lower or equal 0.001 meters, from the IVD container 30.

According to some embodiments, the read and writeable data carrier 50 may be applied to the IVD container 30 and/or an IVD container holder 40 by using material closure such as by adhering the read and writeable data carrier 50 to the IVD container 30 and/or an IVD container holder 40.

According to some embodiments, the read and writeable data carrier 50 may be attached to the IVD container 30 by a self-adhesive surface of the read and writeable data carrier 50.

Figures 6A1 to 6C, 7A, 7B and Figures 9, 10, 11 show different options for attaching a read and writeable data carrier 50 to the IVD container. Specifically, in Figures 6A1 to 6C, 7A, 7B a read and writeable data carrier 50 attached immediately to the IVD container 30 is shown. In this case of Figures 6A1 to 6C, the read and writeable data carrier 50 is located e.g. above a barcode and/or name field (Indicated by "Test" in the Figures 6A1 to 6C). In Figures 9, 10 and 11, a read and writeable data carrier 50 is shown attached to the IVD container 30 via the IVD container holder 40. In this case, the read and writeable data carrier may be located at a side face of the IVD container holder 40.

According to some embodiments, a single read and writeable data carrier 50 is used for storing the at least one physical quantity of a single IVD container 30. According to an example, the single read and writeable data carrier 50 is immediately attached to, e.g. glued to, the single IVD container 30, e.g. as depicted in Figures 6A1 to 6C, 7A and 7B.

According to some embodiments, a single read and writeable data carrier 50 is used for storing the at least one physical quantity of one or more IVD containers 30 held in a single IVD container holder 40. According to an example, the single read and writeable data carrier 50 is immediately attached to the single IVD container holder 40 that can hold one or more IVD containers 30; an example of which is depicted in Figure 9 to 11.

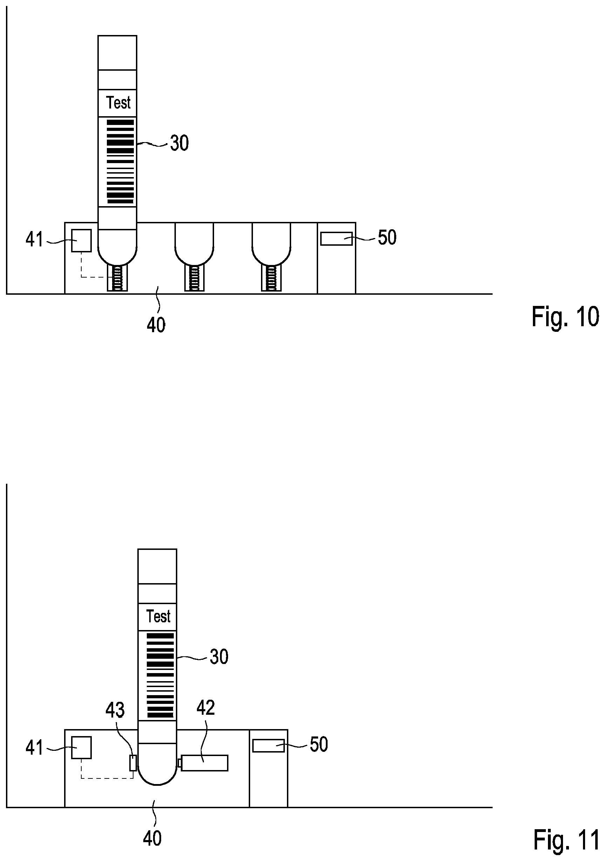

According to some embodiments, a single read and writeable data carrier 50 is used for storing the at least one physical quantity of a multiple IVD containers 30. According to an example, the single read and writeable data carrier 50 is immediately attached to a single IVD container holder 40 that can hold multiple, e.g. a matrix of, IVD containers 30; an example of which is depicted in Figure 10.

According to some embodiments, additionally, the physical quantity may be stored in a centralized database for storing physical quantities of a plurality of IVD containers. The centralized database can be stored on a server, e.g. a cloud server. Storing in a centralized database can e.g. allow for back-upping the physical quantities, providing the physical quantities to instruments that cannot read out the single read and writeable data carrier 50, and/or gathering the physical quantities for statistical and/or QC related purposes.

The term "IVD container holder" as used herein is a broad term and is to be given its ordinary and customary meaning to a person of ordinary skill in the art and is not to be limited to a special or customized meaning. According to some embodiments, the IVD container holder 40 may be a device designed for receiving the at least one IVD container 30. According to some embodiments, the IVD container holder 40 is designed for at least partially enclosing and holding the IVD container 30. According to some embodiments, the IVD container holder 40 comprises at least one section that is designed as a negative to at least parts of an IVD container 30 to be received, e.g. a lower part thereof. The IVD container 30 held in the IVD container holder 40 may e.g. be moved by the transport system 10TRANS of the IVD laboratory 1 in that the IVD container holder 40 is moved.

According to some embodiments, the IVD container holder 40 may be designed for receiving a plurality of IVD containers 30. In an example, the IVD container holder 40 can be a rack designed for holding multiple IVD container 30. According to some specific embodiments, the IVD container holder 40 may comprise a plurality of convex openings, which - for example - may be upward open; Figure 10 shows an exemplary embodiment of such an IVD container holder 40, here embodied as a rack. The depicted IVD container holder 40 is designed for holding up to three IVD containers 30, wherein in Figure 10 one IVD container 30 held in the IVD container holder 40 is exemplarily shown. In the embodiment shown in Figure 10, the read and writeable data carrier 50 is attached to the IVD container 30 in that it is attached to the IVD container holder 40.

According to some embodiments, the IVD container holder 40 may comprise a matrix-shaped pattern of openings.

According to some embodiments, the IVD container holder 40 may be a container holder designed for receiving at most one IVD container 30; examples of which are e.g. shown in Figures 6A1 to 6C. For example, the IVD container holder 40 may be designed as a puck, which may comprise a tube receiving opening designed for receiving the IVD container 30.

According to some embodiments, retrieving of the at least one physical quantity from the read and writeable data carrier 50 may comprise reading the at least one physical quantity from the read and writeable data carrier 50. According to some embodiments, retrieving of the at least one physical quantity from the read and writeable data carrier 50 may comprise at least one process of obtaining the at least one physical quantity from the read and writeable data carrier 50. According to some embodiment, the retrieving may be initiated by the retrieving unit 22 or by another entity (e.g. a control unit 23).

According to some embodiments, the at least one physical quantity may be retrieved via one or more interfaces, such as a data interface. The interface may form a boundary configured for transferring data. The interface may provide means for exchanging data. According to some embodiments, the interface may provide a data transfer connection, e.g. Bluetooth, NFC, inductive coupling or the like.

According to some embodiments, the retrieving the at least one physical quantity may be performed by using a retrieving unit 22 comprising at least one RFID reader. The RFID reader may be designed for reading an RFID chip by using radio-frequency electromagnetic radiation. Specifically, the RFID reader may be designed to read the information stored in a RFID chip by decoding the radio-frequency signal. The RFID reader, as an example, may comprise an NFC standard communication interface or NFC reader.

According to some embodiments, the retrieving of the physical quantity may comprise retrieving one or more of a wall thickness of the IVD container 30, an outer 3D-shape of the IVD container 30, a 3D-shape of the IVD container 30, an angle of the IVD container 30, a curvature of the IVD container 30.

According to some embodiments, the step of measuring may be performed at a first IVD laboratory instrument 10 and the step of retrieving is performed at a second IVD laboratory instrument 10; the first IVD laboratory instrument 10 resp. the second laboratory instrument 10 can e.g. be a pre-analytic IVD laboratory instrument 10PRE, an analytic IVD laboratory instrument 10ANA, and/or a post-analytic IVD laboratory instrument 10POST.

According to some specific embodiments, the first IVD laboratory instrument 10 may be a pre-analytic IVD laboratory instrument 10PRE, and the second IVD laboratory instrument 10 may be an analytic IVD laboratory instrument 10ANA and/or a post-analytic IVD laboratory instrument 10POST.

According to some embodiments, the IVD laboratory instrument 10 may be any apparatus or apparatus component or apparatus section designed for executing at least one container-processing step of one or more IVD containers 30 comprising a sample and/or a reagent. For example, the pre-analytic IVD laboratory instrument 10PRE may comprise one or more apparatus sections such as for different processes of sample preparation. According to some embodiments, at least one of the IVD laboratory instruments 10 may be designed for executing one or more container-processing steps such as centrifugation, aliquotation, pipetting, mixing, dispensing, sample analysis.

According to some embodiments, a pre-analytic IVD laboratory instrument 10PRE may be or may comprise one or more devices for executing one or more pre-analytical container-processing steps on one or more IVD container 30 such as on a sample contained by an IVD container 30.

According to some embodiments, the pre-analytic IVD laboratory instrument 10PRE may be designed for preparing the IVD container 30, in particular a sample contained by the IVD container 30, for one or more succeeding analytical tests. For example, a pre-analytical container-processing step can be, a centrifugation step, a capping-, decapping- or recapping step, an aliquotation step, a step of adding buffers to a sample, and the like.

According to some embodiments, the pre-analytic IVD laboratory instrument 10PRE may be designed for pretreating a biological sample prior to use, such as centrifuging plasma from blood, diluting viscous fluids, lysis or the like. According to some embodiments, the pretreating may involve filtration, distillation, concentration, inactivation of interfering components, and the addition of reagents. According to some embodiments, the pre-analytic IVD laboratory instrument 10PRE designed for rendering an initially solid or semi-solid biological sample liquid by dissolving or suspending it with a suitable liquid medium.

According to some embodiments, the post-analytic IVD laboratory instrument 10POST may be designed for performing at least one post-analytical container-processing step. According to some embodiments, the post-analytic IVD laboratory instrument 10POST may be designed for automatically processing, storing, and/or disposing one or more samples. For example, the post-analytical container-processing steps may comprise a capping- or recapping step, a step for unloading a sample from the IVD container 30, or a step for transporting the IVD container 30 to a storage unit or to a unit for collecting biological waste.

According to some embodiments, the analytic IVD laboratory instrument 10ANA may be designed for obtaining at least one measurement value of a sample, e.g. of a component of a sample. According to some embodiments, the analytic IVD laboratory instrument 10ANA may be operable to determine via various chemical, biological, physical, optical or other technical procedures a measurement value of a sample or a component thereof. For example, the analytic IVD laboratory instrument 10ANA may be operable to measure a measurement value of the sample (e.g. of at least one analyte thereof) and return the measured measurement value.

According to some embodiments, the list of possible measurement values returned by the analytic IVD laboratory instrument 10ANA may comprise, without limitation, concentrations of the analyte in the sample, a digital (yes or no) result indicating the existence of the analyte in the sample (corresponding to a concentration above a detection level), optical parameters, DNA or RNA sequences, data obtained from mass spectrometry of proteins or metabolites, and physical or chemical parameters of various types.

According to some embodiments, the analyzing of the biological sample may comprise detecting at least one analyte of interest in the biological sample. According to some embodiments, the detecting the analyte in the biological sample may be a quantitative and/or qualitative determination of at least one analyte in the biological sample. The result of the analysis measurement, as an example, may be a concentration of the analyte and/or the presence or absence of the analyte to be determined. Examples of analytes of a biological sample may e.g. be molecules of various sizes, ions, proteins, metabolites and the like.

According to some embodiments, the analytic IVD laboratory instrument 10ANA may comprise at least one unit designed for assisting with the pipetting, dosing, and/or mixing of samples and/or reagents.

According to some embodiments, the analytic IVD laboratory instrument 10ANA, may comprise a reagent holding unit for holding reagents to perform the assays, e.g. wherein the reagent holding unit is a realized as or comprised in an IVD container 30. For example, reagents may be comprised in an IVD container 30 or in a plurality of IVD containers 30 containing individual reagents or group of reagents, e.g. wherein the IVD container(s) 30 may be placed in at least one IVD container holder 40.

According to some embodiment, the analytic IVD laboratory instrument 10ANA, may comprise a consumable feeding unit.

According to some embodiments, the analytic IVD laboratory instrument 10ANA may comprise a process and detection system whose workflow is optimized for certain types of analysis.

According to some embodiments, the analytical IVD laboratory instrument 10ANA may be a clinical chemistry analyzer, a coagulation chemistry analyzer, a immunochemistry analyzer, an urine analyzer, a nucleic acid analyzer, a tissue analyzer such as a morphological stainer and a histochemical strainer.

According to some embodiments, the analytical IVD laboratory instrument 10ANA may designed to detect the result of chemical or biological reactions or to monitor the progress of chemical or biological reactions.

The differentiation between pre- analytic, analytic, post-analytic, and transport may e.g. refer to different IVD laboratory instruments or different sections of a single apparatus. For example, a single IVD laboratory apparatus may be designed for one or more of a pre- analytical, analytical function, post-analytical function, transport function.

According to some embodiments, the method may comprise the step of specifying a container-processing step related to the handling of the IVD container 30 based on the retrieved at least one physical quantity. The term "container-processing step" as used herein is a broad term and is to be given its ordinary and customary meaning to a person of ordinary skill in the art and is not to be limited to a special or customized meaning. According to some embodiments, the container processing step may comprise performing at least one workflow step of at least one workflow on the IVD container 30. For example, a workflow may define a sequence in which container-processing steps are carried out. According to some embodiments, the container-processing step may be at last one activity belonging to a workflow. For example, the activity can be of an elementary or complex nature and is typically performed at or by one or more IVD laboratory instruments. For example, the activity may comprise gripping the IVD container 30, transferring the IVD container 30 from a first IVD container holder 40 to a second IVD container holder 40, positioning the IVD container 30 (e.g. within an IVD container holder 40), performing at least one test on the sample stored in the IVD container 30, and/or disposing the IVD container 30.

According to some embodiments, the step of specifying a container-processing step related to the handling of the IVD container 30 based on the retrieved at least one physical quantity may comprise choosing a container-processing step. According to some embodiments, the step of specifying a container-processing step related to the handling of the IVD container 30 based on the retrieved at least one physical quantity may comprise choosing a processing-parameter of a container-processing step. According to some specific embodiments, the step of specifying a container-processing step related to the handling of the IVD container 30 based on the retrieved at least one physical quantity may comprise specifying a gripping force with which a gripper 13 grips the IVD container 30, e.g. a gripping force suited for a certain wall thickness of the IVD container 30.

According to some embodiments, the step of specifying a container-processing step related to the handling of the IVD container 30 based on the retrieved at least one physical quantity may comprise specifying an IVD container holder 40 for holding the IVD container 30, e.g. an IVD container holder 40 that is designed for holding an IVD container 30 of a certain diameter and/or a certain form).

According to some embodiments, the step of specifying a container-processing step related to the handling of the IVD container 30 based on the retrieved at least one physical quantity may comprise specifying a position in an IVD container holder 40 for holding the IVD container 30, e.g. a position that is designed for holding an IVD container 30 of a certain diameter and/or a certain form.

According to some embodiments, the step of specifying a container-processing step related to the handling of the IVD container 30 based on the retrieved at least one physical quantity may comprise specifying to transfer the IVD container 30 from a first IVD container holder 40 to a second IVD container holder 40, e.g. a second IVD container holder 40 that is designed for holding an IVD container 30 of a certain diameter and/or a certain form.

According to some embodiments, the step of specifying a container-processing step related to the handling of the IVD container 30 based on the retrieved at least one physical quantity may comprise specifying to transfer the IVD container 30 from a first position in an IVD container holder 40 comprising two or more positions for holding IVD containers 30 to a second position in the IVD container holder 40, e.g. a second position that is designed for holding an IVD container 30 of a certain diameter and/or a certain form.

According to some embodiments, the method may comprise the step of performing the specified container-processing step related to the handling of the IVD container 30 (e.g. moving the IVD container 30 accordingly).

According to some embodiments, the method further may comprise the steps of
- (reference number 118) determining at least one property of the IVD container 30 using the at least one physical quantity, and
- (reference number 120) storing the at least one property of the IVD container 30 on the read and writeable data carrier 50 attached to the IVD container 30.
According to some embodiments, the method further may comprise retrieving the at least one property from the read and writeable data carrier 50 attached to the IVD container 30. Figure 3 illustrates an embodiment similar to that of Figure 1 of an exemplary flowchart comprising steps 118 and 120 in addition to the steps shown in Figure 1.

According to some embodiments, the property of the IVD container 30 may be information assigned to the IVD container 30. According to some specific embodiments, the property of the IVD container 30 may be assigned to the IVD container 30 using the physical quantity, e.g. where various physical properties in form of dimensions are used to assign the property of being of a certain type to the IVD container 30, e.g. a type that matches the dimensions. According to some embodiments, the property of the IVD container 30 may be a feature assigned to the IVD container 30 by using at least one lookup table, e.g. a lookup table of the dimensions of certain types of IVD containers 30.

According to some embodiments, the property may be stored on the read and writeable data carrier 50 with respect to a lookup table, e.g. the type of the IVD container is encoded with respect to a lookup table.

According to some embodiments, the at least one physical quantity may be used for indicating, e.g. determining, at least one of the following:
- a damaging of the IVD container 30,
- a presence or an absence of a swab in the IVD container 30,
- a number of swabs in the IVD container 30,
- a fill-level of a fluid in the IVD container 30,
- a fill-volume of a fluid in the IVD container 30,
- a lower level and/or an upper level of a phase in the IVD container 30,
- a volume of a phase in the IVD container 30,
- a type of IVD container 30,
- a presence of a separation gel in the IVD container 30, and/or
- a presence of a stabilization powder at an wall of the IVD container 30.

According to some embodiments, using the at least one physical quantity a damaging of the IVD container 30 may be determined. For example, the determining of a damaging may use the physical quantity outer 3D shape and/or 3D shape determined by probing, e.g. scanning, the outer 3D shape or 3D shape of the IVD container 30, e.g. by using a LIDAR system 66.

According to some embodiments, using the at least one physical quantity a presence or an absence of a swab in the IVD container 30 may be determined. For example, the determining of a presence or an absence of a swab may use the physical quantity mass, e.g. determined by a mass and/or weigh measurement.

According to some embodiments, using the at least one physical quantity a number of swabs in the IVD container 30 may be determined. For example, the determining of a number of swabs may use the physical quantity mass.

According to some embodiments, using the at least one physical quantity a fill-level of a fluid in the IVD container 30 may be determined. For example, the determining of a fill-level may use the physical quantity wall thickness of the IVD container 30, e.g. for correcting/refining an optical fill-level measurement using the wall thickness.

According to some embodiments, using the at least one physical quantity a fill-volume of a fluid in the IVD container 30 may be determined. For example, the determining of a fill-volume may use the physical quantity inner diameter(s) and/or a 3D-shape of the IVD container 30 (e.g. measured using a LIDAR system 66); the calculation of the fill-volume possibly further utilizes a knowledge of a fill-level of a fluid in the IVD container 30.

According to some embodiments, using the at least one physical quantity a lower level and/or an upper level of a phase in the IVD container 30 may be determined. For example, the determining of a lower level and/or an upper level of a phase may use the physical quantity wall thickness of the IVD container 30, e.g. for correcting/refining an optical measurement using the wall thickness.

According to some embodiments, using the at least one physical quantity a volume of a phase in the IVD container 30 may be determined. For example, the determining of a volume of a phase may use the physical quantity inner diameter(s) and/or a 3D-shape of the IVD container 30 (e.g. measured using a LIDAR system 66); the calculation of the volume of a phase possibly further utilizes a knowledge of a lower level and/or an upper level of the phase in the IVD container 30.

According to some embodiments, using the at least one physical quantity a type of IVD container 30 may be determined. For example, the determining of a type of IVD container 30 may use the physical quantity outer 3D shape and/or the 3D shape of the IVD container 30 (e.g. determined by scanning the outer 3D shape or 3D shape of the IVD container 30).

According to some embodiments, using the at least one physical quantity a presence of a separation gel in the IVD container 30 may be determined. For example, the determining of a presence of a separation gel in the IVD container 30 may use the physical quantity wall thickness of the IVD container 30, e.g. for correcting/refining an optical measurement using the wall thickness.

According to some embodiments, using the at least one physical quantity a presence of a stabilization powder at a wall of the IVD container 30 may be determined. For example, the determining of a presence of a stabilization powder at a wall of the IVD container 30 may use the physical quantity wall thickness of the IVD container 30, e.g. for correcting/refining an optical measurement using the wall thickness.

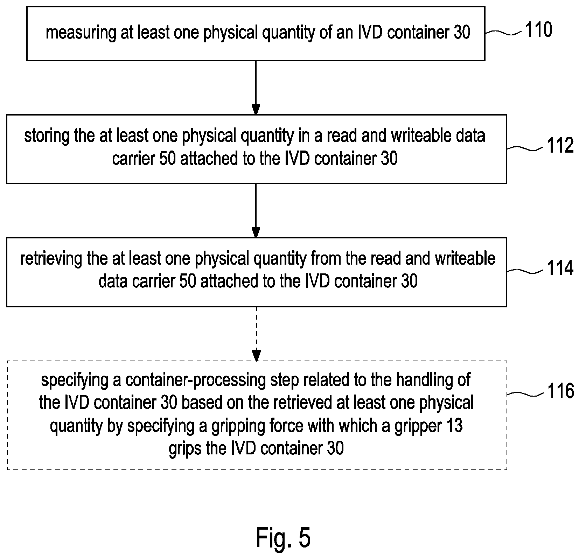

Further proposed is a method for gripping an IVD container 30 in an IVD laboratory 1, the method comprising the automated method for handling an IVD container 30 according to some embodiment described herein and the following step:
- specifying a gripper force with which a gripper 13 grips the IVD container 30.
As shown in the Figure 5, the proposed method for gripping an IVD container 30 in an IVD laboratory 1 comprises - in addition to the steps of measuring 110 at least one physical quantity of an IVD container 30, storing 112 the at least one physical quantity in a read and writeable data carrier 50 attached to the IVD container 30, and retrieving 114 the at least one physical quantity from the read and writeable data carrier 50 attached to the IVD container 30 - a step of specifying 116 a container-processing step related to the handling of the IVD container 30 based on the retrieved at least one physical quantity in form of specifying a gripping force with which a gripper 13 grips the IVD container 30. According to an example, the gripping force is specified using a physical quantity value concerning a measured wall thickness at a section of the IVD container 30 at which the IVD container 30 is to be gripped; the gripping force e.g. being specified such that it is not so strong as to endanger the integrity of the IVD container 30.

The term "gripper" as used herein is a broad term and is to be given its ordinary and customary meaning to a person of ordinary skill in the art and is not to be limited to a special or customized meaning. According to some embodiment, the gripper may be designed for performing at least one gripping function such as gripping and/or moving and/or handling and/or transporting and/or positioning an IVD container 30. According to some embodiments, the gripper 13 may comprise at least one gripper body and at least one gripper finger. According to some embodiments, the gripper body may be a mounting element designed such that further elements, in particular the at least one gripper finger of the gripper are mountable to the gripper body. For example, the gripper 13 may comprise two gripper fingers designed for exerting the gripper force with which the gripper 13 grips the IVD container 30. The gripper 13 may be connected to at least one control unit 23 such that the control unit 23 can control the gripper 13, in particular the gripper body and/or the gripper finger(s). According to some embodiments, specifying of the gripper force may be based on the retrieved at least one physical quantity, e.g. a wall thickness and/or a diameter.

Further proposed is an IVD laboratory 1 designed for analyzing biological samples and designed for handling IVD containers 30. The IVD laboratory 1 comprises one or more IVD laboratory instruments 10. The IVD laboratory 1 is designed for performing the method for handling an IVD container 30 according to some embodiment described herein and/or the method for gripping an IVD container 30 in an IVD laboratory 1 according to some embodiment described herein. An exemplary embodiment of an IVD laboratory 1 is illustrated in Figure 2.

According to some embodiments, the IVD laboratory 1 may comprise
- a measuring unit 20 designed for measuring the at least one physical quantity of the IVD container 30;
- a storing unit 21 designed for storing the at least one physical quantity in the read and writeable data carrier 50 attached to the IVD container 30; and
- a retrieving unit 22 designed for retrieving the at least one physical quantity from the read and writeable data carrier 50 attached to the IVD container 30.

According to some embodiments, the retrieving unit 22 may be designed for reading the physical quantity stored in the read and writeable data carrier 50 from the read and writeable data carrier 50. According to some specific embodiments, the retrieving unit 22 may comprise at least one RFID reader.

According to some embodiments, the measuring unit 20 may comprise one or more of
- a camera 61,
- a reflector 62,
- a light emitter 63,
- a light detector 64,
- a laser 65,
- a LIDAR system 66,
- a mass-sensor 67, and/or
- an artificial intelligence unit 68.
Exemplary embodiments of the measuring unit 20 are shown in Figures 6A1 and 6A2. In Figure 6A1, an embodiment with one or more of a camera 61, a reflector 62, a light emitter 63, a light detector 64, a laser, a LIDAR-system 65 and an artificial intelligence unit 68 is shown. In Figure 6A2 an embodiment using a mass-sensor 67 is depicted.

According to some embodiments, the measuring unit 20 may comprise a camera 61. The camera 61 may be designed for imaging at least one image of the IVD container 30. As indicated in Figure 6A1 IVD container 30 may be rotated so that the camera 61 can take images from different sides, An artificial intelligence unit 68 may be designed for evaluating one or more images of the IVD container 30 and for determining at least one physical quantity from the one or more images, e.g. one or more of dimensions, 3D-shape, outer 3D-shape.

According to some embodiments, the processor may comprise an artificial intelligence unit 68, e.g. designed for object detection. The artificial intelligence unit 68 may be designed for applying at least one trained machine learning model e.g. on an image, wherein the trained machine learning model was e.g. trained on at least one training dataset comprising image data and target values of the physical quantities to be measured. According to an example, the trained machine learning model was pre-trained to for recognizing IVD containers 30 in images.

According to some embodiments, the measuring unit 20 may comprise at least one light emitter 63 and at least one light detector 64. The light emitter 63 may be designed for generating at least one light beam and for illuminating the IVD container 30. The light detector 64 may be designed for detecting at least one light beam generated in response to the illumination by the IVD container 30 and/or a sample stored in the IVD container 30, e.g. by reflection, transmission, absorption. The measuring unit 20 may, in some embodiments, comprise at least one reflector 62 designed for directing the light beam generated in response to the illumination to the light detector 64. The measuring unit 20 may further comprise at least one processor designed for evaluating the detected light beam and for determining at least one physical quantity from the detected light beam (e.g. from an intensity thereof).

The determining of the physical quantity may be performed at different positions along a height of the IVD container 30, e.g. for measuring a profile of the wall thickness along the height.

According to some embodiments, the measuring unit 20 may comprise a Light detection and ranging (LIDAR) system 66. The LIDAR system 66 may be designed for probing the IVD container 30. The LIDAR system 66 may comprise at least one laser 65 designed for generating at least one light beam for probing the IVD container 30. The LIDAR system 66 may comprise at least one light detector 64 designed for detecting at least one light beam generated by the IVD container 30 in response to the illumination and for generating at least one LIDAR signal. The measuring unit 20 may further comprise at least one processor designed for evaluating signals of the LIDAR system 66 and for determining at least one physical quantity from the image, e.g. one or more of dimensions, 3D-shape, outer 3D-shape.

According to some embodiments, the measuring unit 20 may comprise a mass-sensor 67. The mass-sensor 67 may be designed for a mass or weigh measurement.

According to some embodiments, the IVD laboratory 1 may comprise a plurality of IVD container holders 40 that each is designed for holding one or more IVD containers 30 and that each comprises a read and writeable data carrier 50, wherein
- the storing unit 21 is designed for storing physical quantities of IVD containers 30 in the read and writeable data carriers 50 comprised in the IVD container holders 40; and
- the retrieving unit 22 is designed for retrieving physical quantities of IVD containers 30 from the read and writeable data carriers 50 comprised in the IVD container holders 40.

According to an example, the IVD laboratory may comprise a transport system using a plurality of IVD container holders 40 (e.g. in form of single-holder pucks that e.g. can move in two dimensions); wherein the IVD containers 30 are transported in between at least some of the IVD laboratory instruments 10 by using the IVD container holders 40; wherein each of the IVD container holders 40 comprises a read and writeable data carrier 50 (e.g. in form of a RFID chip); wherein at a first IVD laboratory instruments 10 the at least one physical quantity of an IVD container 30 is measured and stored in the read and writeable data carrier 50 of a first IVD container holder 40 by which the IVD container 30 is first transported; later, the at least one physical quantity of the IVD container 30 is retrieved frim the read and writeable data carrier 50 of the first IVD container holder 40 by a second IVD laboratory instrument 10 and used for handling the IVD container 30 at the second IVD laboratory instrument 10. It may be the case that the IVD container 30 is later placed into (e.g. by the second IVD laboratory instrument 10) and transported by a second IVD container holder 40, wherein the at least one physical quantity of the IVD container 30 is stored in the read and writeable data carrier 50 of that second IVD container holder 40 (e.g. by a storing unit of the second IVD laboratory instrument 10); in such case the at least one physical quantity of the IVD container 30 may be deleted from the read and writeable data carrier 50 of the first IVD container holder 40. According to an example, the at least one physical quantity of the IVD container 30 is only stored in the read and writeable data carrier 50 of the specific IVD container holder 40 currently holding that IVD container 30 and is deleted from the read and writeable data carrier 50 of the specific IVD container holder 40 after that IVD container 30 is removed form that specific IVD container holder 40.

According to some embodiments, the at least one physical quantity is stored in a first read and writeable data carrier 50 attached to the IVD container 30, is retrieved from the first read and writeable data carrier 50 attached to the IVD container 30, and stored in a second read and writeable data carrier 50 attached to the IVD container 30. According to some specific embodiments, in between the retrieving the at least one physical quantity from the first read and writeable data carrier 50 and the storing the at least one physical quantity in the second read and writeable data carrier 50 at least one, e.g. both, of the first read and writeable data carrier 50 and the second read and writeable data carrier 50 are not (or at least not always) in proximity to the IVD container 30, e.g. wherein the IVD container 30 is handled by an IVD laboratory instrument 10 in between and the first read and writeable data carrier 50 and the second read and writeable data carrier 50 are each comprised in IVD container holders 40 that do not hold the IVD laboratory instrument 10 during at least some of the handling of the of the IVD container 30 by the IVD laboratory instrument 10.

According to some embodiments, the IVD laboratory 1 may comprise a plurality of IVD containers 30, wherein
- to each of the IVD containers 30 a read and writeable data carrier 50 is attached (e.g. immediately attached),
- the storing unit 21 is designed for storing physical quantities of IVD containers 30 in the read and writeable data carriers 50 attached to the IVD containers 30; and
- the retrieving unit 22 is for retrieving physical quantities of IVD containers 30 from the read and writeable data carriers 50 attached to the IVD containers 30.
According to an example of such an embodiment, the physical quantities of a specific IVD container 30 are stored in the read and writeable data carrier 50 that is attached (e.g. immediately attached) to that specific IVD container 30, and e.g. retrieved therefrom by at least one (e.g. by each) IVD laboratory instrument 10 handling the specific IVD container 30 thereafter.

According to some embodiments, the measuring unit 20 may be comprised in a in a pre-analytic IVD laboratory instrument 10PRE and/or in an analytic IVD laboratory instrument 10ANA; and the retrieving unit 22 may be comprised in a pre-analytic IVD laboratory instrument 10PRE and/or in an analytic IVD laboratory instrument 10ANA and/or in a post-analytic IVD laboratory instrument 10POST.

According to some embodiments, the measuring unit 20 may be comprised in a pre-analytic IVD laboratory instrument 10PRE and the retrieving unit 22 may be comprised in an analytic IVD laboratory instrument 10ANA and/or in a post-analytic IVD laboratory instrument 10POST. According to some specific embodiments, in addition, the storing unit 21 may be comprised in the pre-analytic IVD laboratory instrument 10PRE as well. Measuring and storing the physical quantity at the pre-analytic IVD laboratory instrument 10PRE may allow using the physical quantity in IVD laboratory instruments that subsequently handle the IVD containers 30, such as e.g. at least one analytic IVD laboratory instrument 10ANA, and/or at least one post-analytic IVD laboratory instrument 10POST.

An exemplary embodiment in which the measuring unit 20 may be comprised by the pre-analytic IVD laboratory instrument 10PRE is shown in Figure 2. The measured physical quantity about the specific IVD container 30 may then be stored in a read and writeable data carrier 50 attached to said IVD container 30 using a storing unit 21 of the depicted pre-analytic IVD laboratory instrument 10PRE. Measuring the physical quantity by the pre-analytic IVD laboratory instrument 10PRE may allow that the physical quantity is available for subsequent container-processing steps.

According to some embodiments, the IVD laboratory 1 is designed for measuring at a beginning of a workflow. Measuring the physical quantity at the beginning of a workflow, in particular in a large IVD laboratory 1, and storing it in the read and writeable data carrier 50 such that it is available at subsequent workflow steps, may allow a large saving in effort for subsequent tasks that need or at least can make use of this information on the IVD container 30. This benefit can particularly be significant for a large IVD laboratory 1 where the same kind of task (e.g. gripping the IVD container 30) could be repeated over and over again.

According to some embodiments, each analytic IVD laboratory instrument 10ANA of the IVD laboratory 1 and each post-analytic IVD laboratory instrument 10POST of the IVD laboratory 1 comprises a retrieving unit 22, such as seen in Fig. 2. This can allow each analytic IVD laboratory instrument 10ANA and each post-analytic IVD laboratory instrument 10POST to retrieve and use the at least one physical quantity, e.g. for one or more container-processing steps at the respective IVD laboratory instrument.

According to some embodiments, the retrieving unit(s) 22 is/are arranged
- at an entry of an analytic IVD laboratory instrument 10ANA (resp. at a transport system 10TRANS, wherein the retrieving unit 22 is arranged in proximity to an entry of an analytic IVD laboratory instrument 10ANA); and/or
- at an entry of a post-analytic IVD laboratory instrument 10POST (resp. in a transport system 10TRANS, wherein the retrieving unit 22 is arranged in proximity to an entry of a post-analytic IVD laboratory instrument 10POST).

Figures 6A to 6C show an exemplary sequence of container-processing steps of an exemplary IVD container 30 handled in the IVD laboratory 1. For example, and e.g. shown in Figures 6A1 and 6A2, the measuring of the physical quantity may be performed by the pre-analytic IVD laboratory instrument 10PRE. As shown in Figure 6A1, the storing of the physical quantity may as well be performed by the same pre-analytic IVD laboratory instrument 10PRE; however, as indicated in Figure 6A2, the storing of the physical quantity may not be performed at the same pre-analytic IVD laboratory instrument 10PRE (but instead e.g. at a transport system (not shown in Fig. 6A2), e.g. at a part of the transport system that is in proximity to the pre-analytic IVD laboratory instrument 10PRE at which the physical quantity was measured). The pre-analytic IVD laboratory instrument 10PRE may comprise a measuring unit 20 comprising one or more of a camera 61, a reflector 62, a light emitter 63, a light detector 64, a laser 65, a LIDAR system 66, a mass-sensor 67, and/or an artificial intelligence unit 68 which are depicted schematically in Figures 6A1 resp. 6A2. For performing the measurement the position of the IVD container 30 may be varied such as for weighing and/or probing. For example, the IVD container 30 may be rotated around an axis, as indicated in Figure 6A1. As further shown in Figure 6A1, a storing unit 21 may be configured for storing the measured physical quantity in the read and writable data carrier 50, e.g. wirelessly. Subsequent, the IVD container 30 may e.g. be transferred to an analytic IVD laboratory instrument 10ANA.

Figure 6B shows an exemplary embodiment of an analytic IVD laboratory instrument 10ANA analyzing a sample transported in the IVD container 30. Subsequent, the IVD container 30 may be transferred to a post-analytic IVD laboratory instrument 10POST. Figure 6C shows an embodiment of a post-analytic IVD laboratory instrument 10POST receiving the IVD container 30. The analytic IVD laboratory instrument 10ANA and/or the post-analytic IVD laboratory instrument 10POST may each comprise the at least one retrieving unit 22 which is designed for retrieving the physical quantity from the read and writeable data carrier 50. For example, at least one of the one or more IVD laboratory instruments 10, for example analytic IVD laboratory instrument 10ANA and/or the post-analytic IVD laboratory instrument 10POST, may comprises a gripper 13 designed for gripping IVD containers 30, wherein the gripper force with which the gripper 13 grips the IVD container 30 may be specified using the at least one physical quantity (e.g. using a wall thickness). Figure 6B shows an example in which the analytic IVD laboratory instrument 10ANA may comprise the at least one retrieving unit 22 which retrieves the physical quantity from the read and writeable data carrier 50. Further shown in Figure 6B is a gripper 13 of the analytic IVD laboratory instrument 10ANA designed for gripping IVD containers 30, wherein the gripper force with which the gripper 13 grips the IVD container 30 may be specified using the at least one physical quantity. Figure 6C shows an example in which the post-analytic IVD laboratory instrument 10POST may comprise the at least one retrieving unit 22 which retrieves the physical quantity from the read and writeable data carrier 50. Further shown in Figure 6C is a gripper 13 of the post-analytic IVD laboratory instrument 10POST designed for gripping IVD containers 30, wherein the gripper force with which the gripper 13 grips the IVD container 30 may be specified using the at least one physical quantity.

Figures 7A and 7B each show exemplary embodiments of an IVD container 30 designed as cartridge (e.g. for storing reagents to be used for analyzing samples in analytic IVD laboratory instruments 10ANA), wherein in each of the Figures 7A and 7B the IVD container 30 is arranged in an analytic IVD laboratory instrument 10ANA comprising a gripper 13 designed for gripping IVD containers 30. The gripper force with which the gripper 13 grips the IVD container 30 may be specified based on the at least one physical quantity.

According to some embodiments, the IVD laboratory 1 may be automated, e.g. in the sense that the IVD laboratory 1 is designed for performing at least one automated handling of IVD containers 30.

According to some embodiments, the IVD laboratory 1 may be designed for automatically performing at least one container processing step. According to some embodiments, the IVD laboratory 1 may comprise at least one control unit 23.

According to some embodiments, the control unit 23 may comprise at least one processing device and/or may be connected to at least one processing device.

According to some embodiments, the control unit 23 may be designed for controlling at least partially at least one IVD laboratory instrument 10. For example, the control unit 23 may be designed for controlling the IVD laboratory 1 or a specific instrument thereof, e.g. to conduct pre-analytic, post-analytic, analytic container, and/or transporting processing steps.

According to some embodiments, the control unit 23 may receive information from a data management unit 24 regarding which container processing step(s) shall be performed with a certain IVD container 30. The data management unit 24 may comprise/run a laboratory coordination software module, e.g. a middleware, which is designed for coordinating the handling of IVD containers 30 (resp. the samples comprised therein); an example of such a laboratory coordination software module is e.g. *cobas*^{®} *infinity laboratory solution* as commercially available on 01-Jun-2021.

According to some embodiments, the control unit 23 may be designed integral with a data management unit 24 and/or may be comprised by a server computer and/or may be part of one instrument and/or even distributed across multiple IVD laboratory instruments 10 of the IVD laboratory 1. According to some embodiments, the control unit 23 may be embodied as a programmable logic controller running a computer readable program provided with instructions to perform the named operations.

According to some embodiments, an IVD laboratory instrument in form of a transport system 10TRANS may be part of the automated IVD laboratory 1. According to some specific embodiments, the laboratory 1 comprises at least one transport system 10TRANS.

According to some embodiments, the transport system 10TRANS may be designed for transporting IVD container(s) 30 to at least one target destination within the IVD laboratory 1. For example, the transport system 10TRANS may be designed for transporting IVD container 30 to IVD laboratory instruments 10, for example to at least one pre-analytic IVD laboratory instrument 10PRE, to at least one analytic IVD laboratory instrument 10ANA, and/or to at least one post-analytic IVD laboratory instrument 10POST.

According to some embodiments, the transport system 10TRANS may be designed to transport IVD container(s) 30 from a first IVD laboratory instrument to a second IVD laboratory instrument, e.g. from a pre-analytic IVD laboratory instrument 10PRE to and analytic IVD laboratory instrument 10ANA, from a first analytic IVD laboratory instrument 10ANA to a second analytic IVD laboratory instrument 10ANA, and/or from an analytic IVD laboratory instrument 10ANA to a post-analytic IVD laboratory instrument 10POST.

According to some embodiments, the transport system 10TRANS may comprise at least one transport plane. According to some embodiments, the transport system 10TRANS may be designed for supporting the IVD container 30.

According to some embodiments, the transport system 10TRANS may be designed for linear (one dimensional) transport, e.g. using a set of IVD container holders 40 that can move linearly. An exemplary embodiment of a linear transport system 10TRANS is shown in Figure 2.

According to some embodiments, the transport system 10TRANS may be designed for two dimensional transport of the IVD container 30, e.g. using a set of IVD container holders 40 that can move in two dimensions.

According to some embodiments, the transport system 10TRANS may be designed for moving the IVD container holders 40 in at least one direction. For example, the transport system 10TRANS may comprise at least one transport element selected from the group consisting of: a conveyor, such as a belt conveyor or a chain conveyor; a vehicle system, such as an electronic vehicle system. According to some specific embodiments, the transport system 10TRANS may be or may comprise a multilane transport system having a plurality of transport elements. According to some specific embodiments, the transport system 10TRANS may be or may comprise a plurality of parallel transport elements. For example, the transport elements may be arranged in a common plane and/or in different planes such as on top of each other.

According to some embodiments, at least one of the one or more IVD laboratory instruments 10 may comprise a gripper 13 designed for gripping IVD containers 30, and the IVD laboratory 1, e.g. a control unit 23 for controlling the IVD laboratory 1 or at least one the IVD laboratory instruments 10, may be designed for specifying the gripper force with which the gripper 13 grips the IVD container based on the at least one physical quantity.

According to some specific embodiments, the specifying of the gripper force based on the at least one physical quantity may be automated, e.g. using a pre-determined algorithm. The pre-determined algorithm can use resp. be trained using empiric data.

Further proposed herein, is an IVD container holder 40 for use in an IVD laboratory 1, wherein
- the IVD container holder 40 is designed for holding an IVD container 30;
- the IVD container holder 40 comprises
   ∘ a container-detection sensor 41 designed for detecting if an IVD container 30 is held by the IVD container holder 40, and
   ∘ a read and writeable data carrier 50 designed for storing physical quantities associated with an IVD container 30; and
- the IVD container holder 40 is designed for erasing physical quantities associated with an IVD container 30 from the read and writeable data carrier 50 if the container-detection sensor 41 detects that this IVD container 30 is no longer held by the IVD container holder 40.
There deletion of physical quantities associated with an IVD container 30 after it is removed from the IVD container holder 40 can allow to design the read and writeable data carrier 50 with limited memory and/or can allow to lower the probability of mistakes.

According to some embodiments, the erasing may comprise deleting all physical quantities, e.g. such that at a given time only physical quantities associated with at most one IVD container 30 are stored in the read and writeable data carrier 50.

According to some embodiments, the erasing may comprise deleting not all physical quantities, e.g. only a single physical quantity.

According to some embodiments, the container-detection sensor 41 comprises a spring mechanism, wherein a spring load larger than a threshold, e.g. a pre-defined threshold (which e.g. may be determined empirically), indicates that an IVD container 30 is held by the IVD container holder 40. An example of an IVD container holders 40 comprising a container-detection sensor 41 comprising a spring mechanism is show in Figure 9. For example, in Figure 9 an IVD container holder 40 comprising a container-detection sensor 41 comprising a spring mechanism is depicted. A further example is shown in the embodiment of Figure 10, wherein the IVD container holder 40 may comprise for each position designed for holding an IVD container 30 a container-detection sensor 41. In Figure 10, three positions for holding IVD container 30 are shown each comprising a container-detection sensor 41.

According to some embodiments, the container-detection sensor 41 may comprise at least one light barrier. For example, the light barrier may be designed for determining the presence of an IVD container 30 in the IVD container holder 40. The container-detection sensor 41 may comprise a light source 42 designed for generating at least one light beam and at least one light detector 43 designed for detecting a light beam illuminating its sensor region. The light detector 43 may be arranged at a side of a cavity (for holding an IVD container 30) opposite to the side at which the light source 42 is arranged; such a container-detection sensor 41 may be designed for deciding if an IVD container 30 is held in said cavity based on the amount of light detected by the light detector 43. The light source 42 may be designed for illuminating the light detector 43, wherein interruption resp. lowering of illumination may indicate that an IVD container 30 is placed in the IVD container holder 40 (resp. a cavity thereof) and resumption of (the full) illumination may indicate absence of the IVD container 30 from the IVD container holder 40 (resp. a cavity thereof). An exemplary example of the container-detector sensor comprising a light barrier is shown in Figure 11.

According to some embodiments, the container-detection sensor 41 may comprise a force sensor, e.g. a Piezoelectric sensor, for detecting if an IVD container 30 is held by the IVD container holder 40, e.g. wherein the force sensor is arranged at a bottom and/or a side of a cavity that is designed for holding an IVD container 30.

According to some embodiments, the IVD container holder 40 may comprise a plurality of positions for holding an IVD container 30, wherein one or more container-detection sensor 41 may be designed for detecting in which position an IVD container 30 is held. According to some specific embodiments, the read and writeable data carrier 50 may be designed for storing physical quantities associated with an IVD container 30 together with an information indicating in which position the IVD container 30 is held; this can allow a retrieving IVD instrument 10 to allocate the physical quantities to the respective IVD containers 30 via the respective positions.

Further disclosed in an IVD laboratory 1 comprising one or more of the proposed IVD container holders 40.

Further disclosed and proposed herein is a computer program including computer-executable instructions for performing the methods proposed herein in one or more of the embodiments enclosed herein when the program is executed by at least one control unit 23, e.g. of at least one IVD laboratory 1 and/or of one or more IVD laboratory instrument(s) 10 of the IVD laboratory 1. Specifically, the computer program may be stored on a computer-readable data carrier and/or on a computer-readable storage medium.

As used herein, the terms "computer-readable data carrier" and "computer-readable storage medium" specifically may e.g. refer to non-transitory data storage means, such as a hardware storage medium having stored thereon computer-executable instructions. The computer-readable data carrier or storage medium specifically may be or may comprise a storage medium such as a random-access memory (RAM) and/or a read-only memory (ROM).

Thus, specifically, one, more than one, or even all of method steps may be performed by using at least one control unit 23, e.g. of at least one IVD laboratory 1 and/or of IVD laboratory instrument(s) of the IVD laboratory 1, for example by using a computer program.

Further disclosed and proposed herein is a computer program product having program code means, in order to perform the methods in one or more of the embodiments enclosed herein when the program is executed, e.g. on at least one control unit 23, e.g. of at least one IVD laboratory 1 and/or of IVD laboratory instrument(s) of the IVD laboratory 1. Specifically, the program code means may be stored on a computer-readable data carrier and/or on a computer-readable storage medium.

Further disclosed and proposed herein is a data carrier having a data structure stored thereon, which, after loading into at least one control unit 23, e.g. of at least one IVD laboratory 1 and/or of IVD laboratory instruments 10 of the IVD laboratory 1, such as into a working memory or main memory of the at least one control unit 23, may execute the methods according to one or more of the embodiments disclosed herein.

Further disclosed and proposed herein is a computer program product with program code means stored on a machine-readable carrier, in order to perform the methods according to one or more of the embodiments disclosed herein, when the program is executed on at least one control unit 23, e.g. of at least one IVD laboratory 1 and/or of IVD laboratory instruments of the IVD laboratory. As used herein, a computer program product refers to the program as a tradable product. The product may generally exist in an arbitrary format, such as in a paper format, or on a computer-readable data carrier and/or on a computer-readable storage medium. Specifically, the computer program product may be distributed over a data network.

Finally, disclosed and proposed herein is a modulated data signal which contains instructions readable by a computer system or computer network, for performing the methods according to one or more of the embodiments disclosed herein.

Referring to the computer-implemented aspects, one or more of the method steps or even all of the method steps of the methods according to one or more of the embodiments disclosed herein may be performed by using at least one processor of at least one control unit 23, e.g. of at least one IVD laboratory 1 and/or of IVD laboratory instruments of the IVD laboratory. Thus, generally, any of the method steps including provision and/or manipulation of data may be performed by using a computer or computer network. Generally, these method steps may include any of the method steps, typically except for method steps requiring manual work, such as providing the samples and/or certain aspects of performing the actual measurements.

Specifically, further disclosed herein are:
- at least one control unit 23, e.g. of at least one IVD laboratory 1 and/or of IVD laboratory instrument(s) of the IVD laboratory 1, comprising at least one processor, wherein the processor is adapted to perform the methods according to one of the embodiments described in this description,
- a computer loadable data structure that is adapted to perform the methods according to one of the embodiments described in this description while the data structure is being executed on at least one control unit 23, e.g. of at least one IVD laboratory 1 and/or of IVD laboratory instrument(s) 10 of the IVD laboratory 1,
- a computer program, wherein the computer program is adapted to perform the methods according to one of the embodiments described in this description while the program is being executed on at least one control unit 23, e.g. of at least one IVD laboratory 1 and/or of IVD laboratory instrument(s) 10 of the IVD laboratory 1,
- a computer program comprising program means for performing the methods according to one of the embodiments described in this description while the computer program is being executed on at least one control unit 23, e.g. of at least one IVD laboratory 1 and/or of IVD laboratory instrument(s) 10 of the IVD laboratory 1,
- a computer program comprising program means according to the preceding embodiment, wherein the program means are stored on a storage medium readable to at least one control unit 23, e.g. of at least one IVD laboratory 1 and/or of IVD laboratory instrument(s) 10 of the IVD laboratory 1,
- a storage medium, wherein a data structure is stored on the storage medium and wherein the data structure is adapted to perform the methods according to one of the embodiments described in this description after having been loaded into a main and/or working storage of at least one control unit 23, e.g. of at least one IVD laboratory 1 and/or of IVD laboratory instrument(s) 10 of the IVD laboratory 1, and
- a computer program product having program code means, wherein the program code means can be stored or are stored on a storage medium, for performing the methods according to one of the embodiments described in this description, if the program code means are executed on at least one control unit 23, e.g. of at least one IVD laboratory 1 and/or of IVD laboratory instrument(s) 10 of the IVD laboratory 1 a computer or on a computer network.

Further proposed are a measuring unit 20, a storing unit 21, a retrieving unit 22, and optionally a control unit 23, that are designed and/or configured for performing any of the proposed methods. The proposed methods can, at least partially, be implemented as computer-implemented methods e.g. to be performed by a signal-processing unit, a computer, a computer network and the like. Further proposed are methods embodied by any of the proposed measuring unit 20, storing unit 21, retrieving unit 22, and optionally control unit 23.

Further proposed are methods embodied by one of the proposed IVD laboratories 1. Further proposed are IVD laboratories embodying one of the proposed methods.

Further proposed is using the method and/or the devices proposed herein in a chemical (not necessarily IVD) laboratory, other laboratory, and/or other context/setting/field.

It will be understood that many variations could be adopted based on the specific structure hereinbefore described without departing from the scope as defined in the following claims.

In particular, the following embodiments are proposed:
Proposal 1: An automated method for handling an in-vitro diagnostics IVD container in an IVD laboratory, the method comprising at least the steps of
   - measuring at least one physical quantity of an IVD container;
   - storing the at least one physical quantity in a read and writeable data carrier attached to the IVD container; and
   - retrieving the at least one physical quantity from the read and writeable data carrier attached to the IVD container.
Proposal 2: The method according to the preceding proposal, wherein
   - the step of measuring is performed at a first IVD laboratory instrument, and
   - the step of retrieving is performed at a second IVD laboratory instrument.
Proposal 3: The method according to the preceding proposal, wherein
   - the first IVD laboratory instrument is a pre-analytic IVD laboratory instrument, and
   - the second IVD laboratory instrument is an analytic IVD laboratory instrument and/or a post-analytic IVD laboratory instrument.
Proposal 4: The method according to any of the preceding proposals, wherein the method comprises the step of
   - specifying a container-processing step related to the handling of the IVD container based on the retrieved at least one physical quantity.
Proposal 5: The method according to the preceding proposal, wherein the step of specifying a container-processing step related to the handling of the IVD container based on the retrieved at least one physical quantity comprises choosing a container-processing step.
Proposal 6: The method according to one of proposals 4 to 5, wherein the step of specifying a container-processing step related to the handling of the IVD container based on the retrieved at least one physical quantity comprises choosing a processing-parameter of a container-processing step.
Proposal 7: The method according to any one of proposals 4 to 6, wherein the step of specifying a container-processing step related to the handling of the IVD container based on the retrieved at least one physical quantity comprises specifying a gripping force with which a gripper grips the IVD container.
Proposal 8: The method according to any one of proposals 4 to 7, wherein the step of specifying a container-processing step related to the handling of the IVD container based on the retrieved at least one physical quantity comprises
   - specifying an IVD container holder for holding the IVD container,
   - specifying a position in an IVD container holder for holding the IVD container,
   - specifying to transfer the IVD container from a first IVD container holder to a second IVD container holder, and/or
   - specifying to transfer the IVD container from a first position in an IVD container holder comprising two or more positions for holding IVD containers to a second position in the container holder.
Proposal 9: The method according to any of proposals 4 to 8, wherein the method comprises the step of
   - performing the specified container-processing step related to the handling of the IVD container.
Proposal 10: The method according to any of the preceding proposals, wherein the IVD container is a sample container.
Proposal 11: The method according to any of the preceding proposals, wherein the IVD container is a reagent container.
Proposal 12: The method according to any of the preceding proposals, wherein the read and writeable data carrier is attached to the IVD container in that it is immediately attached to the IVD container.
Proposal 13: The method according to any of the proposals 1 to 11, wherein the read and writeable data carrier is attached to the IVD container in that it is attached to an IVD container holder for holding the IVD container.
Proposal 14: The method according to any of the preceding proposals, wherein the at least one physical quantity comprises at least one dimension of at least a part of the IVD container.
Proposal 15: The method according to any of the preceding proposals, wherein the at least one physical quantity comprises one or more of
   - a wall thickness of the IVD container,
   - an outer 3D-shape of the IVD container,
   - a 3D-shape of the IVD container,
   - an angle of the IVD container,
   - a curvature of the IVD container.
Proposal 16: The method according to any of the preceding proposals, wherein the at least one physical quantity comprises one or more of
   - an outer diameter of the IVD container,
   - an inner diameter of the IVD container,
   - a height of the IVD container,
   - a volume of the IVD container, and/or
   - a mass of the IVD container.
Proposal 17: A method for gripping an IVD container in an IVD laboratory, the method comprising the automated method according to any of the preceding proposals and the following step:
   - specifying a gripper force with which a gripper grips the IVD container.
Proposal 18: An IVD laboratory designed for analyzing biological samples and designed for handling IVD containers, the IVD laboratory comprising one or more IVD laboratory instruments, and the IVD laboratory being designed for performing the method of any of the preceding proposals.
Proposal 19: The IVD laboratory according to the preceding proposal, wherein the IVD laboratory comprises
   - a measuring unit designed for measuring the at least one physical quantity of the IVD container;
   - a storing unit designed for storing the at least one physical quantity in the read and writeable data carrier attached to the IVD container; and
   - a retrieving unit designed for retrieving the at least one physical quantity from the read and writeable data carrier attached to the IVD container.
Proposal 20: The IVD laboratory according to the preceding proposal, wherein the measuring unit is comprised in a pre-analytic IVD laboratory instrument and the retrieving unit is comprised in an analytic IVD laboratory instrument and/or a post-analytic IVD laboratory instrument.
Proposal 21: The IVD laboratory according to proposal 19, wherein the measuring unit is comprised in a pre-analytic IVD laboratory instrument and/or in an analytic IVD laboratory instrument and the retrieving unit is comprised in a pre-analytic IVD laboratory instrument and/or in an analytic IVD laboratory instrument and/or in a post-analytic IVD laboratory instrument.
Proposal 22: The IVD laboratory according to any of proposals 18-21, wherein
   - at least one of the one or more IVD laboratory instruments comprises a gripper designed for gripping IVD containers, and
   - the IVD laboratory is designed for specifying the gripper force with which the gripper grips the IVD container based on the at least one physical quantity.
Proposal 23: The IVD laboratory according to any of proposals 18-22, wherein the measuring unit comprises one or more of
   - a camera,
   - a reflector,
   - a light emitter,
   - a light detector,
   - a laser,
   - a LIDAR system,
   - a mass-sensor, and/or
   - an artificial intelligence unit.
Proposal 24: The IVD laboratory according to any of proposals 18-23 the IVD laboratory comprising a plurality of IVD container holders that each is designed for holding one or more IVD containers and that each comprises a read and writeable data carrier, wherein
   - the storing unit is designed for storing physical quantities of IVD containers in the read and writeable data carriers comprised in the IVD container holders; and
   - the retrieving unit is designed for retrieving physical quantities of IVD containers from the read and writeable data carriers comprised in the IVD container holders.
Proposal 25: The IVD laboratory according to any of proposals 18-24, the IVD laboratory comprising a plurality of IVD container, wherein
- to each of the IVD container a read and writeable data carrier is attached,
   - the storing unit is designed for storing physical quantities of IVD containers in the read and writeable data carriers attached to the IVD containers; and
   - the retrieving unit is for retrieving physical quantities of IVD containers from the read and writeable data carriers attached to the IVD containers.
Proposal 26: The IVD laboratory according to any of proposals 18-25, wherein the IVD laboratory comprises at least one control unit, wherein the control unit is designed for controlling at least partially at least one IVD laboratory instrument.
Proposal 27: An IVD container holder for use in an IVD laboratory, e.g. one of the IVD laboratories according to proposal 18 to 26, wherein
   - the IVD container holder is designed for holding an IVD container;
   - the IVD container holder comprises
      ∘ a container-detection sensor designed for detecting if an IVD container is held by the IVD container holder, and
      ∘ a read and writeable data carrier designed for storing physical quantities associated with an IVD container; and
   - the IVD container holder is designed for erasing physical quantities associated with an IVD container from the read and writeable data carrier if the container-detection sensor detects that this IVD container is no longer held by the IVD container holder.
Proposal 28: The IVD container holder according to the preceding proposal, wherein the container-detection sensor comprises a spring mechanism, wherein a spring load larger than a threshold indicates that an IVD container is held by the IVD container holder.
Proposal 29: The IVD container holder according to one of proposals 27 to 28, wherein
   - the IVD container holder comprises a plurality of positions for holding an IVD container;
   - the container-detection sensor is designed for detecting in which position an IVD container is held;
   - the read and writeable data carrier is designed for storing physical quantities associated with an IVD container together with an information indicating in which position the IVD container is held.

### List of reference numbers

- 1: IVD laboratory
- 10: IVD laboratory instrument
- 10PRE: pre-analytic IVD laboratory instrument
- 10ANA: analytic IVD laboratory instrument
- 10POST: post-analytic IVD laboratory instrument
- 10TRANS: transport system
- 13: gripper
- 20: measuring unit
- 21: storing unit
- 22: retrieving unit
- 23: control unit
- 24: data management unit
- 30: IVD container
- 40: IVD container holder
- 41: container-detection sensor
- 42: light source
- 43: light detector
- 50: read and writeable data carrier
- 61: camera
- 62: reflector
- 63: light emitter
- 64: light detector
- 65: laser
- 66: LIDAR system
- 67: mass-sensor
- 68: artificial intelligence unit
- 110: measuring
- 112: storing
- 114: retrieving
- 116: specifying a container-processing step
- 118: determining at least one property of the IVD container
- 120: storing the at least one property of the IVD container

## Claims

1. An automated method for handling an in-vitro diagnostics IVD container (30) in an IVD laboratory (1), the method comprising at least the steps of
- measuring at least one physical quantity of an IVD container (30);
- storing the at least one physical quantity in a read and writeable data carrier (50) attached to the IVD container (30); and
- retrieving the at least one physical quantity from the read and writeable data carrier (50) attached to the IVD container (30).

2. The method according to the preceding claim, wherein
- the step of measuring is performed at a first IVD laboratory instrument (10), and
- the step of retrieving is performed at a second IVD laboratory instrument (10).

3. The method according to the preceding claim, wherein
- the first IVD laboratory instrument (10) is a pre-analytic IVD laboratory instrument (10PRE), and
- the second IVD laboratory instrument (10) is an analytic IVD laboratory instrument (10ANA) and/or a post-analytic IVD laboratory instrument (10POST).

4. The method according to any of the preceding claims, wherein the method comprises the step of
- specifying a container-processing step related to the handling of the IVD container (30) based on the retrieved at least one physical quantity.

5. The method according to the preceding claim, wherein the step of specifying a container-processing step related to the handling of the IVD container (30) based on the retrieved at least one physical quantity comprises choosing a container-processing step.

6. The method according to one of claims 4 to 5, wherein the step of specifying a container-processing step related to the handling of the IVD container (30) based on the retrieved at least one physical quantity comprises choosing a processing-parameter of a container-processing step.

7. The method according to any one of claims 4 to 6, wherein the step of specifying a container-processing step related to the handling of the IVD container (30) based on the retrieved at least one physical quantity comprises specifying a gripping force with which a gripper (13) grips the IVD container (30).

8. The method according to any of the preceding claims, wherein the at least one physical quantity comprises at least one dimension of at least a part of the IVD container.

9. The method according to any of the preceding claims, wherein the at least one physical quantity comprises one or more of
- a wall thickness of the IVD container (30)
- an outer 3D-shape of the IVD container (30),
- a 3D-shape of the IVD container (30),
- an angle of the IVD container (30),
- a curvature of the IVD container (30),

10. An IVD laboratory (1) designed for analyzing biological samples and designed for handling IVD containers (30), the IVD laboratory (1) comprising one or more IVD laboratory instruments (10), and the IVD laboratory (1) being designed for performing the method of any of the preceding claims, wherein the IVD laboratory (1) comprises
- a measuring unit (20) designed for measuring the at least one physical quantity of the IVD container (30);
- a storing unit (21) designed for storing the at least one physical quantity in the read and writeable data carrier (50) attached to the IVD container (30); and
- a retrieving unit (22) designed for retrieving the at least one physical quantity from the read and writeable data carrier (50) attached to the IVD container (30).

11. The IVD laboratory (1) according to the preceding claim, the IVD laboratory (1) comprising a plurality of IVD container holders (40) that each is designed for holding one or more IVD containers (30) and that each comprises a read and writeable data carrier (50), wherein
- the storing unit (21) is designed for storing physical quantities of IVD containers (30) in the read and writeable data carriers (50) comprised in the IVD container holders (40); and
- the retrieving unit (22) is designed for retrieving physical quantities of IVD containers (30) from the read and writeable data carriers (50) comprised in the IVD container holders (40).

12. The IVD laboratory (1) according to any of claims 10 to 11, the IVD laboratory (1) comprising a plurality of IVD container (30), wherein
- to each of the IVD container (30) a read and writeable data carrier (50) is attached,
- the storing unit (21) is designed for storing physical quantities of IVD containers (30) in the read and writeable data carriers (50) attached to the IVD containers (30); and
- the retrieving unit (22) is for retrieving physical quantities of IVD containers (30) from the read and writeable data carriers (50) attached to the IVD containers (30).

13. An IVD container holder (40) for use in an IVD laboratory (1) of claims 10 to 12, wherein
- the IVD container holder (40) is designed for holding an IVD container (30);
- the IVD container holder (40) comprises
∘ a container-detection sensor (41) designed for detecting if an IVD container (30) is held by the IVD container holder (40), and
∘ a read and writeable data carrier (50) designed for storing physical quantities associated with an IVD container (30); and
- the IVD container holder (40) is designed for erasing physical quantities associated with an IVD container (30) from the read and writeable data carrier (50) if the container-detection sensor (41) detects that this IVD container (30) is no longer held by the IVD container holder (40).

14. The IVD container holder (40) according to the preceding claim, wherein the container-detection sensor (41) comprises a spring mechanism, wherein a spring load larger than a threshold indicates that an IVD container (30) is held by the IVD container holder (40).

15. The IVD container holder (40) according to one of claims 13 to 14, wherein
- the IVD container holder (40) comprises a plurality of positions for holding an IVD container (30);
- the container-detection sensor (41) is designed for detecting in which position an IVD container (30) is held;
- the read and writeable data carrier (50) is designed for storing physical quantities associated with an IVD container (30) together with an information indicating in which position the IVD container (30) is held.
